# EUROPEAN PATENT SPECIFICATION

(11) **EP 3 453 298 B1**
(45) Date of publication and mention of the grant of the patent: **30.12.2020**
(21) Application number: 17792884.3
(22) Date of filing: 02.05.2017
(51) Int. Cl.: A47L 9/16, B08B 1/00

(54) **VACUUM CLEANER**
STAUBSAUGER
ASPIRATEUR

(30) Priority: 03.05.2016 KR 20160054854
(43) Date of publication of application: 13.03.2019
(73) Proprietor: LG Electronics Inc., Seoul 07336 (KR)
(72) Inventor: HYUN, Kietak, Seoul 08592 (KR); KO, Jungmin, Seoul 08592 (KR); EO, Soohan, Seoul 08592 (KR); LEE, Sangchul, Seoul 08592 (KR)
(74) Representative: Vossius & Partner Patentanwälte Rechtsanwälte mbB
(86) International application number: PCT/KR2017/004658
(87) International publication number: WO 2017/191982

(56) References cited:
- EP-A2- 1 023 864
- DE-U1-202015 008 649
- JP-A- 2010 094 438
- KR-A- 20060 098 765
- KR-A- 20060 112 420
- KR-A- 20080 061 102
- KR-A- 20160 038 570

## Description

### BACKGROUND OF THE INVENTION

### 1. Field of the invention

The present disclosure relates to a vacuum cleaner configured to collect foreign matter, dust and fine dust in a separate manner through a multi-cyclone.

### 2. Description of the related art

A vacuum cleaner is an apparatus configured to introduce air using suction power and filter and collect foreign matter, dust, fine dust, and the like contained in the air to discharge clean air again to the outside.

The types of vacuum cleaners may be divided into i) a canister type, ii) an upright type, iii) a hand type, iv) a cylindrical floor type, and the like.

The canister type vacuum cleaner is a vacuum cleaner mostly used at home in recent years, with a structure in which a suction unit and a cleaner body are separated from each other. In general, the canister type vacuum cleaner is not provided with a rotary brush, and suitable to clean a floor due to performing cleaning only with the suction of air through the suction unit.

On the contrary, the upright type vacuum cleaner is a vacuum cleaner with a structure in which a suction unit is integrally formed into a cleaner body. In general, the upright type vacuum cleaner may be provided with a rotary brush, thereby having an advantage capable of cleaning up even dust or the like within a carpet, contrary to the canister type vacuum cleaner.

However, vacuum cleaners in the related art have drawbacks as follows.

First, as in a structure disclosed in Korean Patent Laid-Open Publication No. 10-2003-0081443 (published on October 17, 2003), for vacuum cleaners having a multi-cyclone structure, each cyclone is vertically disposed to cause a problem of increasing the height of a dust collector thereof. Furthermore, the dust collector is designed to have a slim profile to solve such a volume increase issue, thereby causing a disadvantage of reducing the volume of a space for collecting actual dust.

In order to solve the foregoing problem, as in a structure disclosed in Korean Patent Laid-Open Publication No. 10-2004-0023417 (published on March 18, 2004), a structure in which a second cyclone is disposed within a first cyclone has been proposed, but it is difficult to efficiently dispose the second cyclone within the first cyclone due to interference between the guide passages provided in each second cyclone. Even when the second cyclone is disposed within the first cyclone, the number of second cyclones is significantly decreased to reduce suction power, thereby resulting in the deterioration of cleaning performance.

In addition, a variety of flows including a high-speed rotation flow due to the suction power of a fan unit are mixed within a dust collector. Such a complicated flow may be an obstacle to introduce foreign matter and dust into a first storage section, and cause a problem in which dust collected in the first storage section may float and flow back in an upward direction.

It may be a factor of deteriorating dust collecting performance as well as the cleaning performance of a vacuum cleaner. Therefore, a structure capable of preventing a backflow of dust that has been filtered by a first cyclone and introduced into the first storage section or dust collected in the first storage section may be taken into consideration.

According to circumstances, as in a structure disclosed in Korean Patent Laid-Open Publication No. 10-2004-0023417 (published on March 18, 2004), in order to prevent the scattering of foreign matter and dust stored in the first storage section below the first cyclone, a skirt may be also provided therein. Since a portion formed with a skirt forms a small gap with an outer case, a phenomenon that foreign matter gets caught in the gap may occur. When foreign matter is trapped in the gap, other foreign matter and dust are prevented from flowing into the first storage section through the gap.

In addition, foreign matter and dust collected in the first storage section gradually become closer to the first cyclone side as they accumulate. Particularly, in case of a bulky foreign matter, even when it is collected in the first storage section, it does not have an aggregated form and spreads in the first storage section, thereby causing a backflow in an upward direction at a portion where dust is piled up.

On the other hand, most of the foreign matter or dust that has not passed through the first cyclone falls down and is collected in the first storage section, but in some cases, foreign matter or dust may be caught or accumulated and fixed on a mesh filter. It may reduce an area of mesh filter for allowing air to pass therethrough, thereby increasing a load on the fan unit that provides suction power as well as visually giving a non-clean impression to the user.

In order to solve this problem, a method of disassembling and cleaning the dust collector may be taken into consideration, but it may cause usage inconveniences to the user, and also there is a problem that cleaning is not easy, in fact, due to a structure in which a portion where the first cyclone is disposed is partitioned from the first storage section.

In addition, as in a structure disclosed in Korean Patent Laid-Open Publication No. 10-2014-0009551 (published on Apr. 21, 2014), a vacuum cleaner typically has a structure in which a connection unit is connected to a suction unit formed in a cleaner body, and air sucked through a flow guide extended from the suction unit to the dust collector is introduced into the dust collector. The sucked air is introduced into the dust collector by the suction power of the fan unit, but there is a problem that the suction power decreases as the sucked air passes through the flow guide of the cleaner body.

Therefore, a structure in which an intake guide directly connected to a connection unit is formed in an upper cover formed with an exhaust guide may be taken into consideration. However, in order to implement this, it should be designed that the intake guide and the exhaust guide do not affect each other (for example, air sucked through the intake guide is not leaked through the exhaust guide), and may preferably have a simple injection-molded structure in consideration of productivity.

In addition, for cleaners in the related art, there exists a limit in providing the user's convenience even during a dust discharge process. There are vacuum cleaners in which dust is blown away during the process of discharging the dust, and also exist vacuum cleaners requiring a very complicated process to discharge dust.

### [Prior Art Documents]

Patent Document 1: Korean Patent Laid-Open Publication No. 10-2003-0081443 (published on October 17, 2003)
Patent Document 2: Korean Patent Laid-Open Publication No. 10-2004-0023417 (published on Mar. 18, 2004)
Patent Document 3: Korean Patent Laid-Open Publication No. 10-2014-0009551 (published on April 21, 2014)
Further related technology is shown in EP 1 023 864 A2 and DE 20 2015 008 649 U1.

### SUMMARY OF THE INVENTION

A first object of the present invention to provide a dust collector for a vacuum cleaner with a new structure capable of improving a multi-cyclone structure that does not deteriorate cleaning performance while lowering its height.

A second object of the present invention is to provide a dust collector capable of guiding the inflow of dust and foreign matter filtered by a first cyclone to a first storage section provided below the first cyclone as well as limiting a backflow of foreign matter and dust.

A third object of the present invention is to provide a dust collector capable of taking foreign matter caught in a gap between a skirt and an outer case provided below a first cyclone to introduce the foreign matter into a first storage section provided below the skirt.

A fourth object of the present invention is to provide a dust collector capable of inducing coagulation and compression between foreign matter and dust stored in a first storage section.

A fifth object of the present invention is to provide a dust collector capable of removing foreign matter and dust caught or accumulated on a mesh filter without passing through a first cyclone.

A sixth object of the present invention is to provide a dust collector capable of reducing a pressure loss and enhancing a suction efficiency without requiring a separate flow guide for guiding air introduced from the outside through a suction unit to an inside of the dust collector.

A seventh object of the present invention is to provide an upper cover of a dust collector that can manufactured through one-time injection molding while having both an intake guide and an exhaust guide.

An eighth object of the present invention is to propose a dust collector capable of collecting dust and fine dust in a separate manner and discharging the collected dust and fine dust at the same time.

In order to accomplish the first object of the present disclosure, a dust collector for a vacuum cleaner according to the present disclosure may include a first cyclone provided within an outer case to filter out dust from air inhaled from an outside thereof and introduce the air from which dust has been filtered out thereinto; a plurality of second cyclones accommodated within of the first cyclone to separate fine dust from the air introduced into the first cyclone; and a cover member disposed to cover an entrance port of the second cyclone, wherein cyclones disposed adjacent to each other among the first and the second cyclones limit a first space within the first cyclone, and the cover member forms a second space communicating with the first space between the entrance port and the cover member, and a guide vane spirally extended along an inner circumference thereof is provided at the entrance port to induce rotational flow in air introduced into the second cyclone through the first and the second space.

The second object of the present disclosure may be accomplished by providing a guide unit having a vane spirally extended along a flow direction of air introduced into the outer case to induce the inflow of foreign matter and dust filtered by the first cyclone at a lower side of the first cyclone.

The third object of the present disclosure may be accomplished by configuring a guide unit (or a rotating portion) having a skirt at a lower side of the first cyclone to be rotatable in at least one direction.

The fourth object of the present disclosure may be accomplished by providing a roller portion configured with ribs facing a lower cover on at least one of the guide unit (or rotating portion) and a pressurizing unit configured to be rotatable therewith.

In order to accomplish the fifth object of the present disclosure, a dust collector of the present disclosure may include a first cyclone provided within an outer case to filter out dust and foreign matter from air inhaled from an outside thereof and introduce the air from which dust and foreign matter have been filtered out thereinto; a second cyclone accommodated within the first cyclone to separate fine dust from the air introduced into the first cyclone; and a rotating unit configured to be rotatable in at least one direction with respect to the first cyclone, wherein the rotating unit is disposed to cover the mesh filter, a pillar extended along a vertical direction of the body; and a scraper provided on an inner surface of the pillar facing an outer surface of the mesh filter to sweep off dust and foreign matter accumulated on the mesh filter during the rotation of the rotating unit.

The sixth object of the present disclosure is accomplished by a configuration in which both an intake guide and an exhaust guide are provided on an upper cover disposed to cover the first and second cyclones and a connection unit configured to communicate with the intake unit is mounted on an inlet of the intake guide.

The seventh object of the present disclosure may be accomplished by a configuration in which the intake guide is formed by two molds assembled at an inlet side of the intake guide and at a bottom side of the upper cover, and the exhaust guide is formed by two molds assembled at a bottom side of the upper cover and an outlet side of the exhaust guide.

In order to achieve the eighth object of the present disclosure, a lower cover is hinge-coupled to the outer case to form a bottom surface of the dust storage section and the fine dust storage section. The lower cover is configured to open the dust storage section and the fine dust storage section at the same time when the lower cover is rotated by the hinge.

Meanwhile, the above-described vacuum cleaner may be configured as follows.

The scraper may be configured to be brought into contact with the mesh filter.

The scraper may be configured with a brush.

The scraper may be formed of an elastic material, and integrally coupled to the pillar formed of a synthetic resin material by double injection molding.

The scraper may be formed of the same synthetic resin material as that of the pillar and integrally formed with the pillar by injection molding.

A plurality of pillars may be disposed to be spaced apart at preset intervals along an outer circumference of the first cyclone.

The rotating unit may further include a lower frame connected to a lower end of the pillar and formed to surround a lower end of the first cyclone; and an upper frame connected to an upper end of the pillar and formed to surround an upper end of the first cyclone.

A skirt extended downward in an outwardly inclined manner may be protruded from the lower frame to prevent the scattering of dust collected in a dust storage section at a lower portion of the rotating unit.

The lower frame may be provided with a vane extended in a spiral shape along a flow direction of air introduced into the outer case to induce the inflow of dust and foreign matter filtered by the first cyclone.

A backflow limiting rib inclined in a direction intersecting the vane may be protruded from an inner circumferential surface of the outer case facing the vane such that foreign matter introduced into the vane is caught while flowing backward in an upward direction by the rotation of the rotating unit.

The dust collector for the vacuum cleaner may further include a pressurizing unit configured to be rotatable in both directions in a dust storage section to pressurize dust and foreign matter collected into the dust storage section formed below the rotating unit so as to reduce a volume thereof, and the rotating unit may be coupled to the pressurizing unit to rotate along with the pressurizing unit.

The rotating unit and the pressurizing unit may be respectively provided with a first foreign matter roller portion and a second foreign matter roller portion configured with a plurality of ribs extended in respective radial directions at preset intervals.

The first foreign matter roller portion may be formed to surround the second foreign matter roller portion.

The first foreign matter roller portion may be located above the second foreign matter roller portion.

A discharge port of the second cyclone may be provided to pass through a bottom surface of the first cyclone, and an inner case for accommodating the discharge port may be provided at a lower portion of the first cyclone to form a fine dust storage section for collecting fine dust discharged through the discharge port.

The dust collector for the vacuum cleaner may further include a lower cover hinge-coupled to the outer case to form a bottom surface of a dust storage section and a fine dust storage section provided at an outside and an inside of the inner case, respectively, and configured to open the dust storage section and the fine dust storage section at the same time when relatively rotating with respect to the outer case by the hinge.

A rotating portion formed to surround the inner case and configured to be relatively rotatable with respect to the inner case may be extended at a lower portion of the rotating unit, and the lower cover may be provided with a driving force transmission unit having a fastening member configured to receive a driving force from a drive unit provided in the cleaner body to rotate, and fastened to a fastening groove provided on an inner circumferential surface of the rotating portion; and a sealing unit mounted on the fastening member, and disposed to cover a lower opening of the inner case when the driving force transmission unit is fastened to the fastening groove.

Moreover, the present disclosure discloses a dust collector for a vacuum cleaner, including a first cyclone provided within an outer case, and provided with a housing on which a plurality of openings are formed along an outer circumference thereof and a mesh filter mounted on the housing to cover the openings; a second cyclone configured to separate fine dust from air from which dust and foreign matter introduced into the first cyclone through the mesh filter are separated; and a rotating unit configured to be rotatable in at least one direction with respect to the first cyclone, and provided with a scraper moved along an outer circumference of the first cyclone while being in contact with the mesh filter during the rotation.

The dust collector for the vacuum cleaner may further include a pressurizing unit configured to be rotatable in both directions in a dust storage section to pressurize dust and foreign matter collected into the dust storage section formed below the rotating unit so as to reduce a volume thereof, and the rotating unit may be coupled to the pressurizing unit to rotate along with the pressurizing unit.

At least one of the rotating unit and the pressurizing unit may be provided with a foreign matter roller portion configured with a plurality of ribs extended in respective radial directions at preset intervals.

The effects of the present disclosure obtained through the above-mentioned solution are as follows.

First, the second cyclone may be completely accommodated into the first cyclone to reduce a height of the dust collector. In this arrangement, a guide vane may be provided at an entrance port of the second cyclone to cause rotational flow to the air introduced into the second cyclone, and thus a separate guide passage extended from one side of the second cyclone may be not required, and as a result, it may be possible to arrange more second cyclones within the first cyclone. Therefore, even though the second cyclone is accommodated within the first cyclone, a number of the second cyclones may not be reduced when compared to the related art, thereby preventing the deterioration of the cleaning performance.

Second, foreign matter and dust filtered by the first cyclone may be guided by a vane of the guide unit provided below the first cyclone, and introduced into the first storage unit under the guide unit. Here, the vane may be spirally formed along a flow direction of the air flowing into the outer case, and at least part of one of vanes may be disposed to overlap with another vane in a vertical direction to limit a backflow of foreign matter and dust.

Third, the guide unit (or rotation unit) provided with a skirt at a lower side of the first cyclone may be configured to be rotatable in at least one direction, and thus even though foreign matter is caught in a gap between the skirt and the outer case, the foreign matter may be released by the rotation of the rotating unit. The foreign matter released from the gap may be introduced into the first storage section under the skirt by rotational flow due to the driving of the vacuum cleaner.

Fourth, at least one of the guide unit (or rotating unit) and the pressurizing unit configured to be rotatable therewith may be provided with a roller portion configured with ribs facing the lower cover, thereby inducing aggregation between foreign matter and dust. When the roller portion is provided on each of the guide unit and the pressurizing unit, and each roller portion is disposed at a different height with respect to the lower cover, the roller portion corresponding to an accumulation height of foreign object and dust may be used to induce aggregation between foreign matter and dust. Furthermore, the roller portion may be combined with the driving of the pressurizing unit to perform compression as well as agglomeration between foreign matter and dust.

Fifth, when the rotating unit rotates with respect to the first cyclone, a scraper provided on a pillar of the rotating unit may be configured to move along the outer circumference of the first cyclone in contact with a mesh filter, and thus it may be possible to continuously remove foreign matter and dust caught and accumulated on the mesh filter when the vacuum cleaner is driven. Therefore, it may be possible to enhance the performance and maintenance convenience of the dust collector.

Sixth, an upper cover disposed to cover the first and second cyclones may be provided with an intake guide and an exhaust guide, and a connection unit may be directly connected to an inlet of the intake guide. According to this, a flow guide provided in the cleaner body in a side inflow structure in the related art may not be required to simplify a suction passage and increase an area of the entrance port when compared to the side inflow structure. Therefore, a pressure loss may be reduced to enhance suction efficiency.

Seventh, when an intake guide is formed with a single passage, and an exhaust guide is configured with an empty space of the intake guide, an upper cover with a suction efficiency may be provided. Furthermore, there is an advantage that an upper cover can be injection-molded at one time by three molds assembled and separated in three directions at an inlet side of the intake guide, an outlet side of the exhaust guide and a bottom side of the upper cover.

Eighth, both the first storage section and the second storage section may be configured to be open when a lower cover is separated therefrom, it may be possible to discharge dust collected in the first storage section and fine dust collected in the second storage section at the same time.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a perspective view illustrating an example of a vacuum cleaner according to the present disclosure;
FIG. 2 is a perspective view illustrating an example of a dust collector illustrated in FIG. 1;
FIG. 3 is a cross-sectional view in which a dust collector illustrated in FIG. 2 is taken along line A-A;
FIG. 4 is a view in which a dust collector illustrated in FIG. 2 is seen from a front side;
FIG. 5 is a view in which a dust collector illustrated in FIG. 2 is seen from a lower side in a state that an outer case thereof is removed;
FIG. 6 is a cross-sectional view of a dust collector illustrated in FIG. 4;
FIG. 7 is a view in which the variance of shapes of foreign matter and dust stored in a first storage section are conceptually compared according to whether or not there exists a roller portion;
FIG. 8 is a conceptual view illustrating a modified example of a guide unit;
FIG. 9 is a cross-sectional view of a dust collector illustrated in FIG. 8;
FIG. 10 is a perspective view illustrating another example of a dust collector illustrated in FIG. 1;
FIG. 11 is an enlarged view illustrating an inner side of portion "B" illustrated in FIG. 10;
FIG. 12 is a cross-sectional view illustrating portion "B" illustrated in FIG. 10;
FIG. 13 is a conceptual view illustrating a modified example of a rotating unit illustrated in FIG. 10;
FIG. 14 is a view in which a dust collector illustrated in FIG. 13 is seen from a lower side;
FIG. 15 is a conceptual view for explaining a structure in which a driving force of a drive unit is transmitted to a rotating unit by a driving force transmission unit;
FIG. 16 is a cross-sectional view of a dust collector illustrated in FIG. 15;
FIG. 17 is a view illustrating that an upper cover is separated from a dust collector illustrated in FIG. 2;
FIG. 18 is a view in which an inlet side of the upper cover illustrated in FIG. 17 is seen;
FIG. 19 is a view in which an outlet side of the upper cover illustrated in FIG. 17 is seen;
FIG. 20 is a view in which a bottom side of the upper cover illustrated in FIG. 17 is seen;
FIG. 21 is a conceptual view illustrating a flow current in the upper cover illustrated in FIG. 17;
FIG. 22 is a conceptual view illustrating a modified example of the upper cover illustrated in FIG. 17;
FIG. 23 is a view in which an inlet side of the upper cover illustrated in FIG. 22 is seen;
FIG. 24 is a view in which an outlet side of the upper cover illustrated in FIG. 22 is seen;
FIG. 25 is a view in which a bottom side of the upper cover illustrated in FIG. 22 is seen; and
FIG. 26 is a conceptual view illustrating a flow current in the upper cover illustrated in FIG. 22.

### DETAILED DESCRIPTION OF THE INVENTION

Hereinafter, a vacuum cleaner associated with the present disclosure will be described in more detail with reference to the accompanying drawings.

According to the present specification, the same or similar elements are designated with the same or similar numeral references even in different embodiments and modified examples, and their redundant description will be omitted.

A modified example has the same structure as that of an embodiment excluding a part having a structural difference from that of the embodiment. Accordingly, a structure, a function, and the like described in the embodiment may be applicable to the modified example unless it is structurally contradictory.

A singular representation may include a plural representation as far as it represents a definitely different meaning from the context.

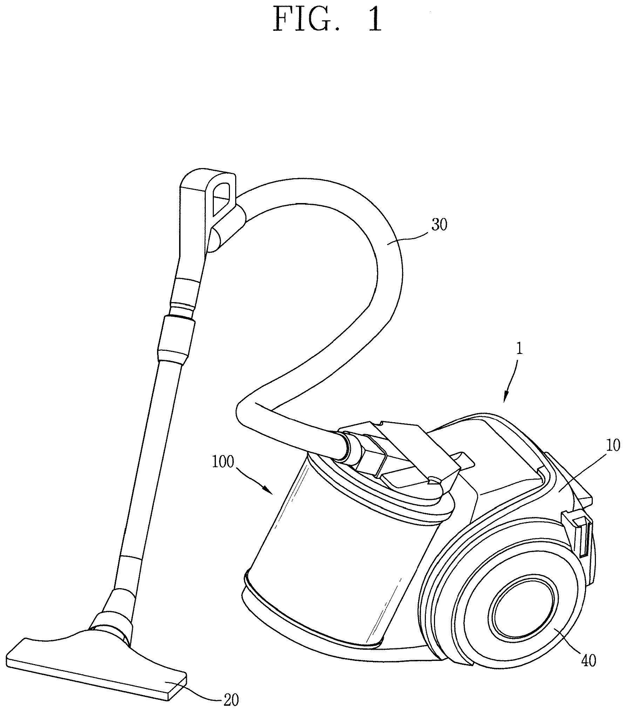

FIG. 1 is a perspective view illustrating an example of a vacuum cleaner 1 according to the present disclosure.

Referring to FIG. 1, the vacuum cleaner 1 may include a cleaner body 10, a suction unit 20, a connection unit, 30, a wheel unit 40, and a dust collector 100.

The cleaner body 10 has a fan unit (not shown) for generating suction power. The fan unit includes a suction motor and a suction fan rotated by the suction motor to generate suction power.

The suction unit 20 is configured to suck air adjacent to the suction unit 20. The air sucked by the suction unit 20 may contain foreign matter, dust, fine dust, ultrafine dust, and the like.

The connection unit 30 is connected to the suction unit 20 and the dust collector 100, respectively, to transfer air containing foreign matter, dust, fine dust, ultrafine dust, and the like sucked through the suction unit 20 to the dust collector 100. The connection unit 30 may be configured in the form of a hose or pipe.

The wheel unit 40 is rotatably coupled to the cleaner body 10 to move or rotate the cleaner body 10 in every direction by rotation.

For an example, the wheel unit 40 may include main wheels and auxiliary wheels. The main wheels are respectively provided at both sides of the cleaner body 10, and the auxiliary wheels are configured to support the cleaner body 10 together with the main wheels and assist the movement of the cleaner body 10 by the main wheels.

In the present disclosure, the suction unit 20, the connection unit 30, and the wheel unit 40 may be applicable to vacuum cleaners in the related art as they are, and thus the detailed description thereof will be omitted.

The dust collector 100 is detachably coupled to the cleaner body 10. The dust collector 100 is configured to separate foreign matter, dust, and fine dust from the sucked air, collect the separated foreign matter, dust, and fine dust, and discharge the filtered air.

In general, a vacuum cleaner in the related art has a structure in which a connection unit is connected to a suction unit formed in the cleaner body, and the sucked air is introduced into a dust collector through a flow guide extended from the suction unit to the dust collector. The sucked air is introduced into the dust collector 100 by the suction power of the fan unit, but there is a problem that suction power decreases as the such air passes through the flow guide of the cleaner body.

On the contrary, the vacuum cleaner 1 of the present disclosure is directly connected to the dust collector 100 as illustrated in the drawing. According to such a connection structure, air sucked through the suction unit 20 is introduced directly into the dust collector 100, and thus suction power may be enhanced as compared to related art. Furthermore, there is an advantage that the formation of a flow guide within the cleaner body 10 is not required. It will be described later in detail.

For reference, the dust collector 100 applied to an canister type vacuum cleaner 1 is illustrated in the present drawing, but the dust collector 100 of the present disclosure may not be necessarily limited to the canister type vacuum cleaner 1. The dust collector 100 of the present disclosure may be also applicable to various vacuum cleaners such as an upright type vacuum cleaner and a robot cleaner.

Hereinafter, various examples of the dust collector 100 having a new structure will be described around an overall configuration of the dust collector 100 and a flow in the dust collector 100.

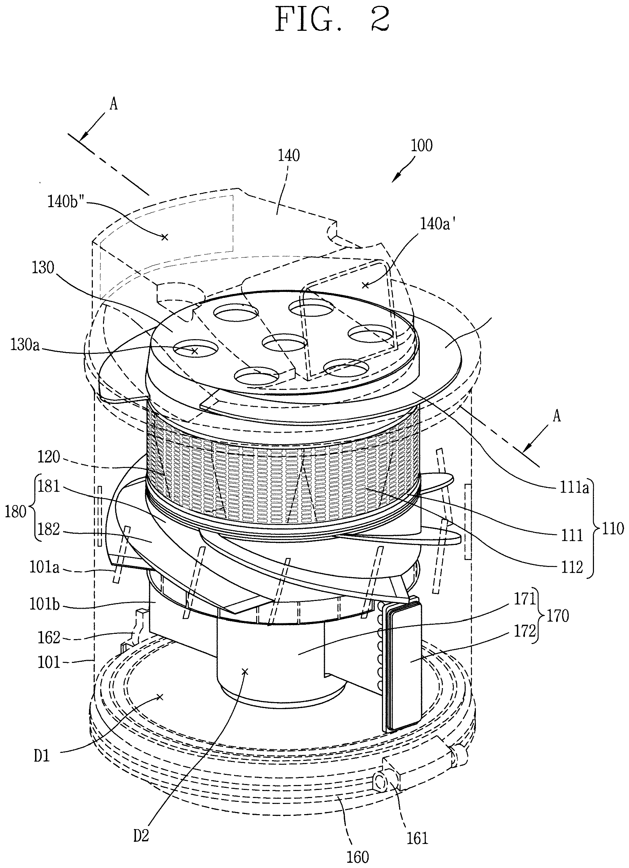

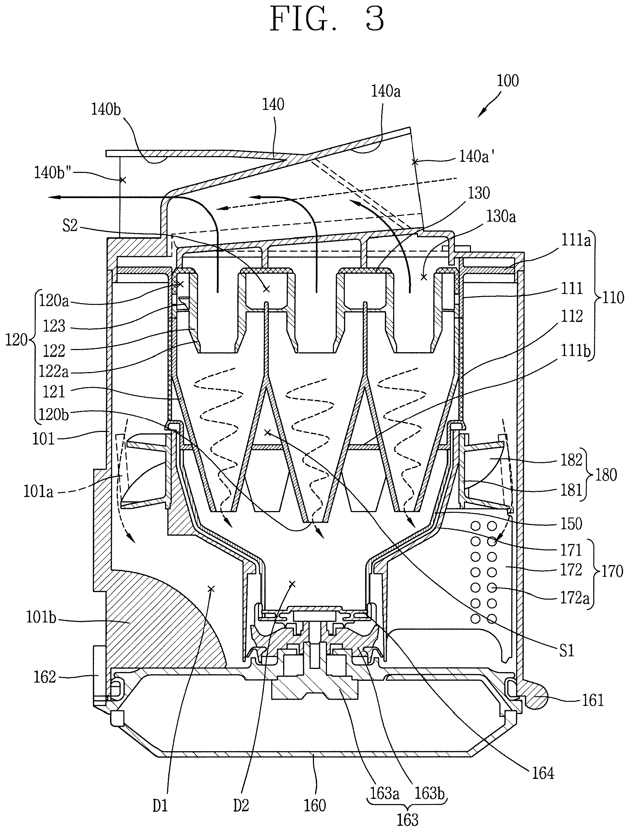

FIG. 2 is a perspective view illustrating an example of the dust collector 100 illustrated in FIG. 1, and FIG. 3 is a cross-sectional view in which a dust collector illustrated in FIG. 2 is taken along line A-A.

Referring to FIGS. 2 and 3, external air sucked by suction power generated from the fan unit of the vacuum cleaner 1 is introduced into the dust collector 100 through an inlet 100a of the dust collector 100. The air introduced into the dust collector 100 is sequentially filtered in a first cyclone 110 and a second cyclone 120 and discharged to an outside of the dust collector 100 through an outlet 100b. Foreign matter, dust, and fine dust separated from air by the first and second cyclones 110, 120 are collected in the dust collector 100.

A cyclone is an apparatus configured to supply a swirling flow to a fluid in which particles are floating to separate the particles from the fluid by a centrifugal force. The cyclone separates foreign matter, dust, and fine dust from the air introduced into the cleaner body 10 by suction power. In the present specification, a relatively large dust is referred to as a "dust", a relatively small dust is referred to as a "fine dust", and a dust smaller than the "fine dust" is referred to as a "ultrafine dust".

The dust collector 100 includes an outer case 101, a first cyclone 110, and a second cyclone 120.

The outer case 101 is configured to accommodate the first and second cyclones 110, 120 and forms a side surface appearance of the dust collector 100. The outer case 101 is preferably formed in a cylindrical shape as illustrated in the drawing, but the present disclosure may not be necessarily limited thereto.

An upper cover 140 is mounted on the outer case 101 to cover the first and second cyclones 110, 120. The upper cover 140 is formed with an intake guide 140a and an exhaust guide 140b of the dust collector 100, respectively. The intake guide 140a may be formed to extend toward an inner circumference of the outer case 101 in such a manner that the sucked air is tangentially introduced into the outer case 101 and circulates along an inner circumference of the outer case 101.

The first cyclone 110 is installed within the outer case 101. The first cyclone 110 may be disposed at an upper portion within the outer case 101. The first cyclone 110 is configured to filter foreign matter and dust from the introduced air and to introduce the air from which foreign matter and dust have been filtered thereinto.

The first cyclone 110 may include a housing 111 and a mesh filter 112.

The housing 111 forms an outer appearance of the first cyclone 110, and may be formed in a cylindrical shape similarly to the outer case 101. The housing 111 may be formed with a support portion 111a for coupling with the outer case 101 so as to protrude in a radial direction. For an example, the support portion 111a may be formed to protrude on an upper portion of the housing 111 along an outer circumference thereof, and the support portion 111a may be coupled to an upper portion of the outer case 101.

The housing 111 is formed in a shape that is vacant thereinside to accommodate the second cyclone 120. An outer circumference of the housing 111 is formed with opening portions communicating with an inside thereof. The openings may be formed at a plurality of positions along an outer circumference of the housing 111.

The mesh filter 112 is provided in the housing 111 to cover the opening portions, and has a mesh or porous shape allowing air to pass therethrough. The mesh filter 112 is formed to separate foreign matter and dust from air introduced into the housing 111.

A size criterion for distinguishing between dust and fine dust may be determined by the mesh filter 112. A small dust passing through the mesh filter 112 may be classified a "fine dust," and a large dust that is unable to pass through the mesh filter 112 may be classified as a "dust."

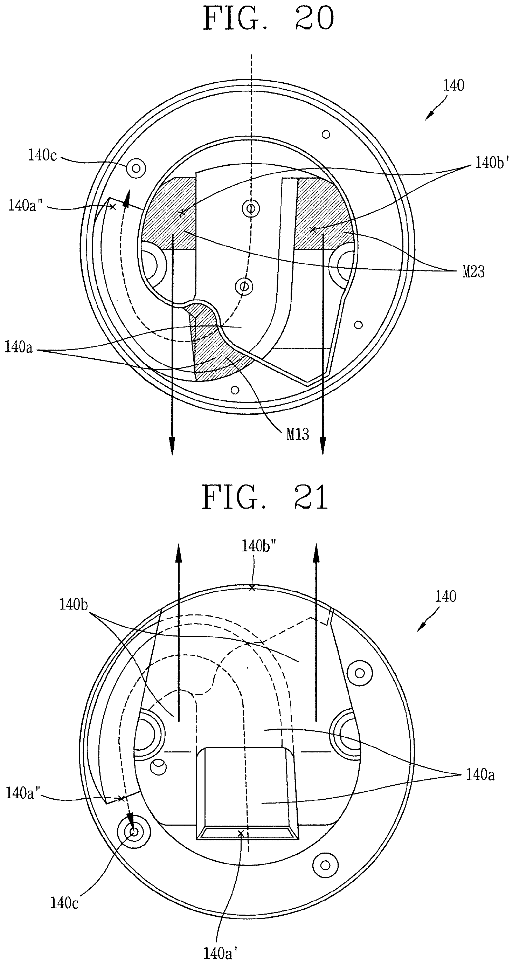

Considering a process of separating foreign matter and dust by the first cyclone 110 in detail, air containing foreign matter, dust and fine dust is introduced into an annular space between the outer case 101 and the first cyclone 110 through an outlet 140a" (refer to FIG. 20) of the intake guide 140a to perform a swirling movement in the annular space.

During the process, relatively heavier foreign matter and dust gradually flow downward while performing a swirling movement in a spiral manner in a space between the outer case 101 and the first cyclone 110 by a centrifugal force, and is collected in the first storage section (D1) which will be described later.

On the other hand, unlike foreign matter and dust, air is introduced into the housing 111 through the mesh filter 112 by suction power. At this time, fine dust relatively lighter than dust may be introduced into the housing 111 along with air.

Referring to FIG. 3, it may be possible to view an internal structure of the dust collector 100 and a flow of air within the dust collector 100.

The second cyclone 120 is disposed in the first cyclone 110 to separate fine dust from air introduced thereinto through the entrance port 120a. As illustrated in the drawing, a plurality of second cyclones 120 may be provided therein. A central axis of the second cyclones 120 may be arranged in parallel to that of the first cyclone 110.

Contrary to a vertical arrangement of the related art in which the second cyclone is disposed above the first cyclone, the second cyclone 120 of the present disclosure may be accommodated into the first cyclone 110 to decrease a height of the dust collector 100. The second cyclone 120 may be formed not to protrude above the first cyclone 110.

In addition, the second cyclone in the related art has a guide passage extending from one side thereof such that air and fine dust is tangentially introduced thereinto to circulate along an inner circumference of the second cyclone, but the second cyclone 120 of the present disclosure does not have such a guide passage. Therefore, the second cyclone 120 has a circular shape when seen from the top.

Referring to FIG. 2, cyclones disposed adjacent to each other among the first and second cyclones 110, 120 define a first space S1. In other words, in a region where the second cyclone 120 is disposed within the first cyclone 110, a vacant space excluding the second cyclone 120 may be understood as a first space (S1). The first space (S1) forms a passage through which air and fine dust introduced into the first cyclone 110 can be introduced into an upper portion of the second cyclone 120.

Each of the second cyclones 120 may be disposed along a vertical direction, and a plurality of the second cyclones 120 may be disposed parallel to each other. According to such an arrangement, the first space (S1) may be formed to extend in a vertical direction within the first cyclone 110.

The cyclones disposed adjacent to each other in the second cyclones 120 may be disposed to be in contact with each other. Specifically, a (circular) conical casing 121 forming an outer appearance of any one of the second cyclones 120 is disposed in contact with a casing 121 of the adjacent second cyclone 120 to form a first space (S1) surrounded by the casing 121.

The casing 121 of any one of the second cyclones 120 may be integrally formed with the casing 121 of the adjacent second cyclone 120. According to the above structure, a plurality of second cyclones 120 may be modularized and provided in the first cyclone 110.

Furthermore, the cyclones arranged along an inner circumference of the first cyclone 110 of the second cyclone 120 may be disposed to be in contact with the inner circumferential surface of the first cyclone 110. Specifically, an inner circumferential surface of the housing 111 adjacent to each other and an outer circumferential surface corresponding to a cylindrical portion of the casing 121 may be disposed to be in contact with each other.

According to the arrangement, the second cyclone 120 may be efficiently disposed within the first cyclone 110. In particular, the second cyclone 120 of the present disclosure does not have a guide passage extending from one side of the second cyclone in the related art, and thus a larger number of second cyclones 120 may be disposed within the first cyclone 110 is. Accordingly, even if the second cyclone 120 has a structure in which the second cyclone 120 is accommodated into the first cyclone 110, a number of the second cyclones 120 may not be decreased compared to the related art, thereby preventing the deterioration of cleaning performance.

A cover member 130 is disposed at an upper portion of the second cyclone 120. The cover member 130 is disposed to cover the entrance portions 120a of the second cyclones 120 at preset intervals to form a second space (S2) communicating with the first space (S1) between the cover member 130 and the entrance portion 120a. The second space (S2) is extended in a horizontal direction on the second cyclone 120, and configured to communicate with the entrance portion 120a of the second cyclone 120.

According to such a communication relationship, air introduced into the first cyclone 110 is introduced into the entrance portion 120a at an upper portion of the second cyclone 120 through the first space (S1) and the second space (S2).

A vortex finder 122 for discharging air from which fine dust is separated is provided at an upper center of the second cyclone 120. Due to such an upper structure, the entrance portion 120a may be defined as an annular space between an inner circumference of the second cyclone 120 and an outer circumference of the vortex finder 122.

The entrance portion 120a of the second cyclone 120 is provided with a guide vane 123 spirally extended along an inner circumference thereof. The guide vane 123 may be provided on an outer circumference of the vortex finder 122 or integrally formed with the vortex finder 122. The guide vane 123 generates rotational flow in air flowing into the second cyclone 120 through the entrance portion 120a.

Considering the flow of air and fine dust introduced into the entrance portion 120a in detail, fine dust gradually flows downward while spirally circulating along an inner circumference of the second cyclone 120, and is finally discharged through the discharge port 120b and collected into the second storage section (D2). Furthermore, air relatively lighter than fine dust is discharged to the vortex finder 122 at an upper portion thereof by the suction power of the fan unit.

According to the above structure, contrary to the related art in which a high-speed rotation flow is generated in a biased manner to one region by a guide passage extended from one side of the second cyclone, a relatively uniform rotation flow is generated over almost an entire region of the entrance portion 120a. Accordingly, a localized high-speed flow does not occur compared to a second cyclone structure in the related art, thereby reducing flow loss due to this.

A plurality of guide vanes 123 may be provided therein, and disposed to be spaced apart from each other at regular intervals along an outer circumference of the vortex finder 122. Each guide vane 123 may be configured to start from the same position at an upper portion of the vortex finder 122 and extend to the same position at a lower portion thereof.

For an example, four guide vanes 123 may be respectively disposed at 90° intervals along an outer circumference of the vortex finder 122. A larger or smaller number of guide vanes 123 may be of course provided depending on a design change, and at least part of any one of the guide vanes 123 may be disposed to overlap with another guide vane 123 in a vertical direction of the vortex finder 122.

Furthermore, the guide vane 123 may be disposed within the first cyclone 110. According to such an arrangement, a flow within the second cyclone 120 occurs within the first cyclone 110. As a result, it may be possible to reduce noise due to the flow within the second cyclone 120.

Meanwhile, a lower diameter of the vortex finder 122 may be formed to be smaller than an upper diameter thereof. According to such a configuration, an area of the entrance port 120a may be decreased to increase an inflow speed into the second cyclone 120, thereby limiting fine dust introduced into the second cyclone 120 from being discharged through the vortex finder 122 along with the air.

FIG. 3 illustrates a view in which a tapered portion 122a a diameter of which gradually decreases as it goes toward an end portion thereof is formed at a lower portion of the vortex finder 122. On the contrary, the vortex finder 122 may be formed in such a manner that a diameter thereof gradually decreases from an upper portion to a lower portion thereof.

On the other hand, a communication hole 130a corresponding to the vortex finder 122 is formed on the cover member 130. The cover member 130 may be disposed to cover an inner space of the first cyclone 110 excluding the vortex finder 122. Though not shown in the drawing, the cover member 130 may be provided with a protruding portion inserted into the vortex finder 122 and formed with a communication hole 130a therein.

An upper cover 140 is disposed on the cover member 130. The upper cover 140 may form an upper appearance of the dust collector 100.

The upper cover 140 includes an intake guide 140a for introducing air sucked from the outside into the dust collector 100 and an exhaust guide 140b for discharging air discharged through a communication hole 130a to an outside of the dust collector 100. An inlet 140a' and an outlet 140b' are respectively formed on the upper cover 140 for the inflow and outflow of air. According to the present drawing, it is shown that the inlet 140a' is formed to face forward, and the outlet 140b" is formed to face backward.

Air discharged through the outlet 140b" of the dust collector 100 may be discharged to the outside through an exhaust port (not shown) of the cleaner body 10. A porous prefilter (not shown) configured to filter ultrafine dust from the air may be installed on a passage extended from the outlet of the dust collector 100 to the exhaust port of the cleaner body 10.

On the other hand, the discharge port 120b of the second cyclone 120 is installed to pass through a bottom surface 111b of the first cyclone 110. A through hole for the insertion of the second cyclone 120 is formed on the bottom surface 111b of the first cyclone 110.

A lower portion of the first cyclone 110 is provided with an inner case 150 for accommodating the discharge port 120b to form a second storage section (D2) for collecting fine dust discharged through the discharge port 120b. The second storage section (D2) may be also referred to as a fine dust storage section in terms of forming a storage space for fine dust. The lower cover 160, which will be described later, forms a bottom surface of the second storage section (D2).

The inner case 150 is disposed to cover a bottom surface 111b of the first cyclone 110, and configured to accommodate the discharge port 120b of the second cyclone 120 therein. The inner case 150 is extended toward a lower portion of the outer case 101. The inner case 150 may have a bowl shape provided with a tapered portion having a narrower cross-sectional area at a lower end than an upper end thereof and a gradually reduced cross-sectional area as it goes downward.

The inner case 150 may be coupled to the housing 111 of the first cyclone 110 by a fastening device (e.g., bolt, hook, adhesive, etc.). Alternatively, the inner case 150 may be integrally formed with the housing 111.

On the other hand, foreign matter and dust filtered through the first cyclone 110 are collected into the first storage section (D1) located below the first cyclone 110. The first storage section (D1) may be also referred to as a foreign-matter-dust storage section in terms of forming a space for storing foreign matter and dust.

In the present drawing, it is shown that the first storage section (D1) defined by the outer case 101 and the pressurizing unit 170 is configured to surround the second storage section (D2). A bottom surface of the first storage section (D1) may be formed by a lower cover 160 which will be described later.

Various flows (for example, an upward flow due to the rotation of the pressurizing portion 172 provided in the pressurizing unit 170) including a high-speed rotational flow due to the suction power of the fan unit are mixed within the dust collector 100.

Such complicated flows are also a hindrance to the inflow of foreign matter and dust into the first storage section (D1). Furthermore, even if dust is collected in the first storage section (D1), dust may float within the first storage section (D1) due to vortex or the like. Due to a structure in which an annual space between the outer case 101 and the first cyclone 110 should be communicated with a space between the outer case 101 and the first storage section (D1) for collecting foreign matter and dust, it may occur a case where dust floating in the first storage section (D1) flows backward into the annular space according to circumstances.

It serves as a factor of deteriorating the cleaning performance of the vacuum cleaner 1 as well as dust collecting performance.

Hereinafter, a structure capable of guiding the inflow of foreign matter and dust filtered by the first cyclone 110 into the first storage section (D1) and preventing dust collected in the first storage section (D1) from flowing backward will be described.

According to the present embodiment, it is shown that a guide unit 180 is provided at a lower side of the first cyclone 110. The guide unit 180 is configured to guide the inflow of foreign matter and dust filtered by the first cyclone 110 into the first storage section (D1) and prevent dust collected in the first storage section (D1) from being moved (i.e., flowing backward) to the first cyclone 110.

The guide unit 180 includes a base 181 and a vane 182. The base 181 and the vane 182 may be integrally formed by injection molding.

The base 181 may be formed in a cylindrical shape similarly to the housing 111. An outer circumferential surface of the base 181 may be formed parallel to an axial direction of the outer case 101.

The vane 182 is protruded from an outer circumference of the base 181 toward an inner circumferential surface of the outer case 101 and spirally extended from an upper side thereof toward a lower side thereof. The vane 182 may be spirally extended along a flow direction of air introduced into the dust collector 100 and circulated along an inner circumference of the outer case 101.

In order to implement this, the vane 182 may be inclined in a direction corresponding to a side of the outlet 140a" of the intake guide 140a provided in the upper cover 140, which will be described later. Here, the corresponding direction denotes that when the side of the outlet 140a" of the intake guide 140a has a negative slope, the vane 182 has a negative slope.

When the vane 182 is formed to have such a directionality, foreign matter and dust contained in air, which spirally circulates and gradually flows down in an annular space between the outer case 101 and the first cyclone 110, may be naturally introduced into the first storage section (D1) at a lower side of the guide unit 180 along the vane 182. In other words, the vane 182 is configured to guide the inflow of foreign matter and dust into the first storage section (D1).

The air introduced into the guide unit 180 spirally circulates along the vane 182 and gradually flows downward. Due to this flow, dust introduced into the vane 182 or dust collected in the first storage section (D1) do not flow backward to a side of the first cyclone 110 due to the flow.

The vane 182 may be protruded from an outer circumferential surface of the first cyclone 110 and disposed adjacent to an inner circumferential surface of the outer case 101. Due to this arrangement, a space provided at an upper side of the guide unit 180 (an annular space between the outer case 101 and the first cyclone 110) may be partitioned from a space provided at a lower side of the guide unit 180 (the first storage section (D1)).

A plurality of vanes 182 may be disposed to be spaced apart from each other at regular intervals along an outer circumference of the guide unit 180. Each vane 182 may be formed to start from the same position at an upper portion of the guide unit 180, and extend to the same position at a lower portion thereof. According to this, a substantially uniform rotational flow may be generated over an entire region of the annular space between the outer case 101 and the guide unit 180. Accordingly, it may be possible to reduce flow loss.

Any one vane 182 of the plurality of vanes 182 may be arranged in such a manner that at least part of the vane 182 overlaps with another vane 182 in a vertical direction of the guide unit 180. According to the above structure, even if a vertical flow toward the first cyclone 110 is instantaneously formed in the vane 182 or the first storage section (D1), it may be blocked by the overwrapping vane 182 at an upper side, thereby restricting an inflow to a side of the first cyclone 110.

Of course, the present disclosure is not limited thereto. A lower end of one vane 182 of the plurality of vanes 182 may be formed apart from an upper end of another guide vane 182 along an outer circumference of the guide unit 180. In other words, they are formed not to overlap with each other in a vertical direction of the guide unit 180.

Referring to FIG. 3, both the first storage section (D1) and the second storage section (D2) are formed to open toward a lower side of the outer case 101. A lower cover 160 is coupled to the outer case 101 to cover the opening portions of the first storage section (D1) and the second storage section (D2), and configured to form a bottom surface of the first storage section (D1) and the second storage section (D2).

As described above, the lower cover 160 is coupled to the outer case 101 to open and close a lower portion thereof. According to the present embodiment, the lower cover 160 is coupled to the outer case 101 through a hinge 161 to open and close a lower portion of the outer case 101 according to the rotation. However, the present disclosure is not limited thereto, and the lower cover 160 may be completely detachably coupled to the outer case 101.

The lower cover 160 is coupled to the outer case 101 to form a bottom surface of the first storage section (D1) and the second storage section (D2). The lower cover 160 is rotated by the hinge 161 to simultaneously discharge dust and fine dust to simultaneously open the first storage section (D1) and the second storage section (D2). When the lower cover 160 is rotated by the hinge 161 to open the first storage section (D1) and the second storage section at the same time, it may be possible to discharge dust and fine dust at the same time.

On the other hand, when dust accumulated in the first storage section (D1) is not collected in one place but dispersed, there is a possibility that dust may be scattered or discharged to an unintended place during the process of discharging the dust. In order to overcome such a problem, the present disclosure is made to reduce a volume by pressurizing the dust collected in the first storage section (D1) using the pressurizing unit 170.

The pressurizing unit 170 is configured to be rotatable in both directions in the first storage section D1. The pressurizing unit 170 includes a rotating portion 171 and a pressurizing portion 172.

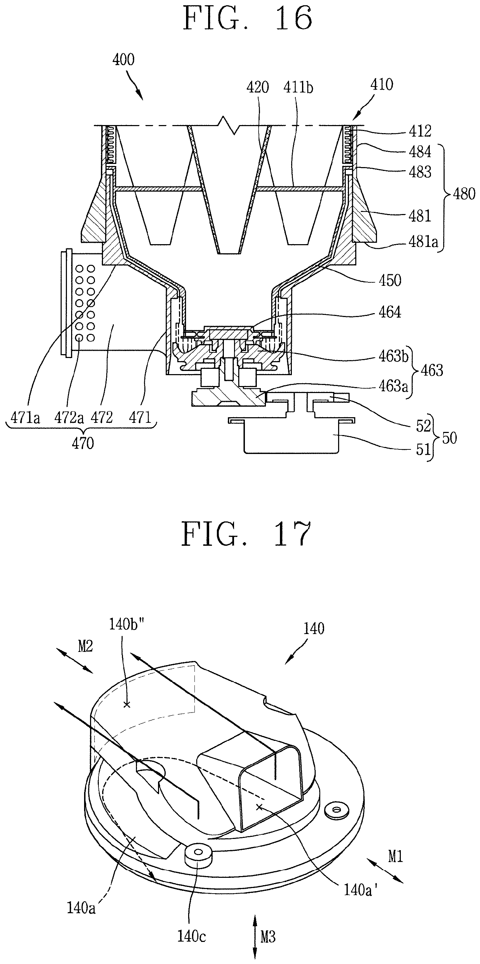

The rotating portion 171 is formed to surround at least part of an inner case 150 and configured to receive a driving force from a drive unit 50 (refer to FIG. 16) of the cleaner body 10 through a driving force transmission unit 163 to be relatively rotatable with respect to the inner case 150. The rotating portion 171 is rotatable in a clockwise or counter-clockwise direction, that is, in both directions.

An inner shape of the rotating portion 171 surrounding the inner case 150 may be formed to correspond to an outer shape of the inner case 150. According to the above structure, when the pressurizing unit 170 is rotated, the inner case 150 is configured to hold the center of rotation. Accordingly, the rotation of the pressurizing unit 170 may be more stably carried out without a separate member for holding the center of rotation of the rotating portion 171.

The rotating portion 171 may be configured to be rotatable in a state of being engaged with the inner case 150. To this end, an engaging portion (not shown) configured to support the rotating portion 171 with respect to a gravity direction may be formed on an outer circumference of the inner case 150. The engaging portion may be formed in various forms such as a projection, a hook, or the like.

According to the above structure, the rotating portion 171 may be in a state of being engaged with the inner case 150, and then even if the lower cover 160 is rotated by the hinge 161 to open the first storage section (D1), the pressurizing unit 170 may be fixed in place.

A fastening groove 171b for coupling with a fastening member 163b of the driving force transmission unit 163, which will be described later, may be formed on a lower inner circumference of the rotating portion 171.

The pressurizing portion 172 is formed to protrude in a radial direction from the rotating portion 171, and configured to rotate within the first storage section (D1) in accordance with the rotation of the rotating portion 171. The pressurizing portion 172 may be formed in a plate shape. Dust collected in the first storage section (D1) is moved to one side of the first storage section (D1) by the rotation of the pressurizing portion 172 and collected therein, and when a lot of dust is accumulated, the dust is pressurized and compress by the pressurizing portion 172.

The pressurizing portion 172 may be formed with a ventilation hole 172a for communicating air. The ventilation hole 172a may be formed on the pressurizing portion 172, and even if the pressurizing portion 172 rotates in the first storage section (D1), a pressure balance between both side regions of the pressurizing portion 172 divided by the pressurizing portion 172 may be adjusted, thereby suppressing an upward flow due to the rotation of the pressurizing portion 172.

An inner wall 101b for collecting dust moved to one side by the rotation of the pressurizing portion 172 may be provided in the first storage section (D1). In the present embodiment, it is shown that the inner wall 101b is formed to extend in a radial direction from a lower inner circumference of the outer case 101. Dust introduced into the first storage section (D1) is collected in both sides of the inner wall 101b by the rotation of the pressurizing portion 172.

The lower cover 160 is provided with a driving force transmission unit 163 connected to the drive unit 50 provided on the cleaner body 10 when the dust collector 100 is mounted on the cleaner body 10, and connected to the pressurizing unit 170 when the lower cover 160 is mounted to cover a lower opening of the outer case 101.

The drive unit 50 includes a drive motor 51 and a drive gear 52 connected to the drive motor 51 to be rotatable. At least part of the drive gear 52 is exposed from the cleaner body 10 in such a manner that the drive gear 52 is configured to couple with a driven gear 163a of the driving force transmission unit 163, which will be described later, when the dust collector 100 is mounted on the cleaner body 10.

The driving force transmission unit 163 is rotated by receiving a driving force from the drive unit 50 provided in the cleaner body 10, and includes a driven gear 163a and a fastening member 163b.

The driven gear 163a is exposed to a lower portion of the lower cover 160 and configured to be rotatable with respect to the lower cover 160. The driven gear 163a is configured to receive a driving force of the drive motor 51 when the dust collector 100 is coupled to the cleaner body 10.

The fastening member 163b is engaged with the driven gear 163a to be rotatable along with the driven gear 163a. The fastening member 163b is exposed to an upper portion of the lower cover 160 and fastened to the fastening groove 171b provided on an inner circumference of the rotating portion 171 when the lower cover 160 is coupled to the outer case 101. According to the present drawing, it is shown in a gear shape in which a plurality of fastening grooves 171b are provided to be spaced apart from each other at regular intervals on an inner circumference of the rotating portion 171, and the fastening member 163b is provided with a plurality of protrusion portions inserted into the fastening grooves 171b. Considering such a shape, the fastening member 163b may be referred to as a fastening gear.

A sealing unit 164 may be mounted on the fastening member 163b. The sealing unit 164 is disposed to cover a lower opening of the inner case 150 when the lower cover 160 is coupled to the outer case 101. In other words, the sealing unit 164 forms a bottom surface of the second storage sections (D2), thereby preventing the collected fine dust from being introduced into a side of the driving force transmission unit 163.

The sealing unit 164 may be configured not to rotate during the rotation of the driving force transmission unit 163. In other words, even if the driving force transmission unit 163 is rotated, the sealing unit 164 may be fixed in a state of being disposed to cover a lower opening of the inner case 150. A portion of the sealing unit 164 in contact with the lower opening of the inner case 150 may be formed of an elastic material for sealing.

According to the above structure, when the lower cover 160 is coupled to the outer case 101, the driving force transmission unit 163 is connected to the pressurizing unit 170 of the dust collector 100, and when the dust collector 100 is connected to the cleaner body 10, the driving force transmission unit 163 is connected to the drive unit 50 of the cleaner body 10. In other words, a driving force generated from the drive unit 50 is transmitted to the pressurizing unit 170 through the driving force transmission unit 163.

At this time, the rotation of the drive motor 51 may be controlled to repeatedly perform a bidirectional rotation of the pressurizing portion 172. For example, the drive motor 51 may be configured to rotate in an opposite direction when a repulsive force is applied in a direction opposite to the rotational direction. In other words, when the pressurizing portion 172 rotates in one direction to compress dust collected in one side at a predetermined level, the drive motor 51 rotates in the other direction to compress the dust collected in the other side.

When there is (almost) no dust, the pressurizing portion 172 may be configured to collide with the inner wall 101b to receive a corresponding repulsive force or receive a repulsive force by a stopper structure (not shown) provided on a rotating path of the pressurizing portion 172 to rotate in an opposite direction.

On the contrary, the controller within the cleaner body 10 may apply a control signal to the drive motor to change a rotational direction of the pressurizing portion 172 at regular intervals, thereby repeatedly generating the bidirectional rotation of the pressurizing portion 172.

By the pressurizing unit 170, dust collected in the first storage section (D1) is gathered or compressed in a predetermined region. Therefore, it may be possible to suppress the scattering of dust during the process of throwing away dust, and remarkably reduce a possibility of being discharged to an unintended place.

Hereinafter, a structure in which the guide unit 180 is connected to the pressurizing unit 170 to be rotatable will be described.

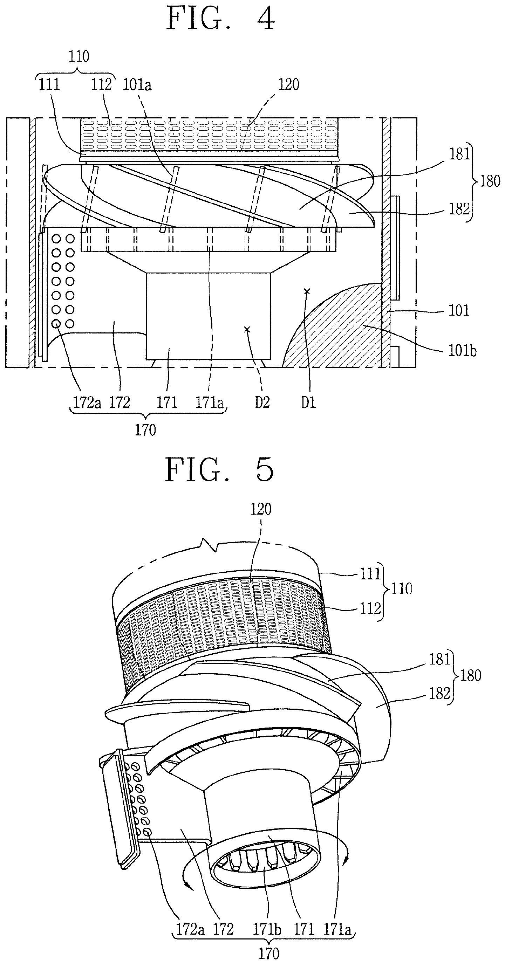

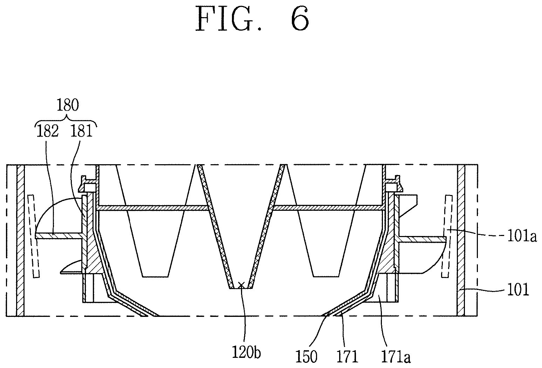

FIG. 4 is a view in which the dust collector 100 illustrated in FIG. 2 is seen from a front side, and FIG. 5 is a view in which the dust collector 100 illustrated in FIG. 2 is seen from a lower side in a state that the outer case 101 is removed, and FIG. 6 is a cross-sectional view of the dust collector 100 illustrated in FIG. 2.

Referring to FIGS. 4 through 6 along with the previous drawings, the guide unit 180 is connected to the pressurizing unit 170 and configured to be rotatable in at least one directions along with the pressurizing unit 170. In terms of configuring the guide unit 180 to be rotatable, the guide unit 180 may also be referred to as a rotating unit.

Referring to FIG. 4, when the guide unit 180 rotates in a counter-clockwise direction (to the right) corresponding to an extension direction in a lower side of the vane 182, foreign matter and dust in air introduced into the vane 182 are moved downward by the rotation of the vane 182. Accordingly, the foreign matter and dust that have introduced into the vane 182 may be more easily collected into the first storage section (D1). Furthermore, even if the foreign matter collected in the first storage section (D1) is introduced into the vane 182, it is pushed back by the rotation of the vane 182.

Considering that a flow spirally circulating and gradually flowing downward is generated on the vane 182, it is expected that the backflow of foreign matter and dust will be even more difficult.

On the contrary, when the guide unit 180 rotates in a clockwise direction (to the left) corresponding to an extending direction in an upper side of the vane 182, foreign matter and dust in air introduced into the vane 182 are moved upward by the rotation of the vane 182. However, since a flow spirally circulating and gradually flowing downward is generated on the vane 182, it is difficult for such a movement and a resultant backflow of foreign matter and dust to occur.

However, when the guide unit 180 rotates in a direction corresponding to an extending direction in an upper side of the vane 182, the following structure may be added in consideration of the possibility of a backflow of foreign matter.

As illustrated in the drawing, a backflow limiting rib 101a inclined in a direction intersecting the vane 182 is protruded on an inner circumferential surface of the outer case 101 facing the vane 182. A plurality of backflow limiting ribs 101a may be disposed to be spaced apart at preset intervals along an inner circumferential surface of the outer case 101.

The backflow limiting rib 101a may be integrally formed with the outer case 101 by injection molding. However, the present disclosure is not limited thereto. The backflow limiting rib 101a may be formed as a separate member from the outer case 101, and attached to an inner circumferential surface of the outer case 101.

Due to the formation of the backflow limiting rib 101a, foreign matter flowing backward from the first storage section (D1) into the vane 182 may be caught by the backflow limiting rib even if the foreign matter is moved upward by the rotation of the vane 182. Accordingly, foreign matter may not completely flow backward to an upper side of the guide unit 180, and collected again into the first storage section (D1).

When either one of the vane 182 and the backflow limiting rib 101a has a positive slope with respect to a rotating shaft of the guide unit 180, the other one may have a negative slope. In FIG. 4, it is shown in the drawing that the vane 182 has a negative slope, and the backflow limiting rib 101a is formed to have a positive slope. According to the above structure, the guide unit 180 rotates in a clockwise direction (to the left) corresponding to the extending direction of the vane 182, so that the foreign object in the first storage section (D1) rides on the vane 182 Even if it rises, it is continuously caught in the backflow limiting rib 101a and drops.

Of course, the inclination relationship of the vane 182 and the backflow limiting rib 101a is not limited to the above example. The backflow limiting rib 101a may be disposed in parallel to a rotating shaft of the guide unit 180. In other words, the backflow limiting rib 101a may be disposed perpendicular to the lower cover 160. Alternatively, the backflow limiting rib 101a may be formed to be inclined along a flow direction of air introduced into the outer case 101 similarly to the vane 182.

On the other hand, the rotation of the guide unit 180 may be carried out by coupling the guide unit 180 to the pressurizing unit 170. In other words, as described above, the pressurizing unit 170 may be rotated by receiving a driving force from the drive unit 50 through the driving force transmission unit 163, and thus the guide unit 180 coupled to the pressurizing unit 170 may also be rotated at the same time during the rotation of the pressurizing unit 170.

Specifically, the base 181 of the guide unit 180 may be coupled to the rotating portion 171 of the pressurizing unit 170. The coupling between the base 181 and the rotating portion 171 may be achieved by various methods such as coupling due to bonding, coupling using a hook member, and a coupling using a hook structure.

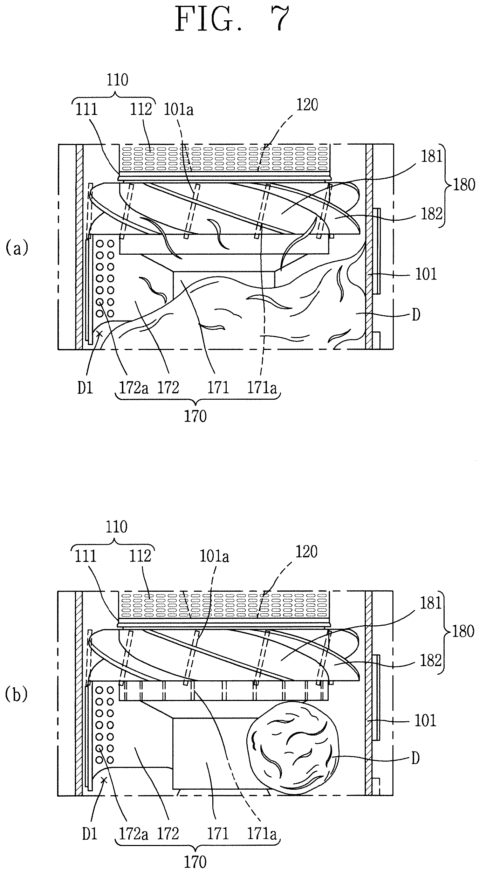

FIG. 7 is a view in which the variance of shapes of foreign matter and dust stored in the first storage section (D1) are conceptually compared according to whether or not there exists a roller portion 171a. FIG. 7A is a view illustrating the shape of foreign matter and dust (D) collected in the first storage section (D1) in a structure that is not provided with the roller portion 171a, and FIG. 7B is a view illustrating the shape of foreign matter and dust (D) collected in the first storage section (D1) in a structure in which the pressurizing unit 170 is provided with the roller portion 171a.

As illustrated in FIG. 7A, as foreign matter and dust (D) collected in the first storage section (D1) accumulate, they gradually become closer to a side of the first cyclone 110. In particular, in the case of a bulky foreign matter, even if it is collected in the first storage section (D1), it is spread in the first storage section (D1) without having an aggregated shape, thereby causing a backflow in an upward direction at a side where the foreign matter and dust (D) accumulate.

In order to solve such a problem, as illustrated in FIG. 7B, the roller portion 171a configured with a plurality of ribs extended in a radial direction at preset intervals may be provided on at least one of the guide unit 180 and the pressurizing unit 170 to face a lower side of the outer case 101. The roller portion 171a is configured to provide a rotational force to foreign matter and dust collected in the first storage section (D1) during the rotation of at least one of the guide unit 180 and the pressurizing unit 170.

In an embodiment illustrated in FIGS. 2 through 6 including FIG. 7B, it is shown that a plurality of ribs constituting the roller portion 171a are respectively extended in a radial direction at preset intervals to the rotating portion 171 facing the lower cover 160. According to the configuration, an upper portion of the foreign matter and dust (D) collected in the first storage section (D1) repeatedly collides with the plurality of ribs during the rotation of the rotating portion171. As a result, the foreign matter and dust (D) is rotated as illustrated in FIG. 7B, and finally the collected foreign matter and dust (D) is rolled in a state of being agglomerated in a substantially spherical shape.

As described above, the foreign matter and dust (D) is agglomerated in a spherical shape by the roller portion 171a, and thus it may be possible to prevent a backflow due to the accumulation of the foreign matter and dust (D) at a predetermined level. When the pressurizing portion 172 is additionally combined with the roller portion 171a, the agglomeration and compression of the foreign matter and dust (D) may be carried out at the same time to enhance the collection performance of the foreign matter and dust (D), thereby significantly reducing the possibility of backflow.

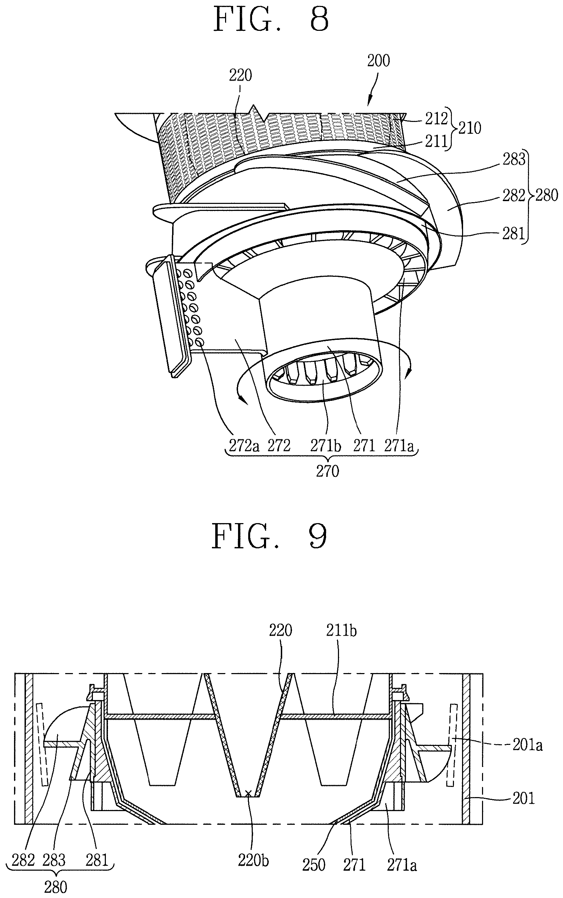

FIG. 8 is a conceptual view illustrating a modified example of the guide unit 180 illustrated in FIG. 2, and FIG. 9 is a cross-sectional view of the dust collector 200 illustrated in FIG. 8.

Referring to FIGS. 8 and 9, the guide unit 280 may have a skirt 283 extended downward from an upper portion thereof in an inclined downward direction. A gap between the skirt 283 and the outer case 201 gradually decreases as it goes from the upper portion to the lower portion.

As the skirt 283 is formed, foreign matter and dust falling without passing through a mesh filter 212 of the first cyclone 210 are guided by the skirt 283 and introduced into the first storage section (D1), but the foreign matter and dust collected in the first storage section (D1) are restricted from flowing upward by the skirt 283. In other words, a backflow of foreign matter and dust collected in the first storage section (D1) is restricted by the skirt 283.

Considering a structure in which the skirt 283 is provided in the guide unit 280 in more detail, the guide unit 280 includes a base 281, a skirt 283, and a vane 282. The base 281, the skirt 283, and the vane 282 may be integrally formed by injection molding.

The base 281 is coupled to a rotating portion 271 of the pressurizing unit 270. The base 281 may be formed in parallel to an axial direction of the outer case 201.

The skirt 283 is extended downward in an inclined manner outward from an upper portion of the base 281. Accordingly, a gap between the skirt 283 and the base 281 gradually increases as it goes from the upper portion to the lower portion.

Though not shown in the drawing, a plurality of ribs forming the foregoing roller portion may be extended in a radial direction in the gap between the base 281 and the skirt 283.

The vane 282 is protruded from the skirt 283 toward an inner circumferential surface of the outer case 201, and spirally extended from the upper side toward the lower side. The vane 282 may be introduced into the dust collector 200 and spirally extended along a flow direction of air circulating along an inner circumference of the outer case 201.

According to the drawing, it is shown a structure in which the base 281 and the skirt 283 are distinguished from each other in shape. However, the present disclosure is not limited thereto. As a modified example, the base 281 and the skirt 283 may be configured as one portion in which the base 281 and the skirt 283 are not separated from each other (in the present drawing, a gap between the base 281 and the skirt is filled), and it may be referred to as a skirt portion. An inner side of the skirt portion is coupled to the rotating portion 271, and an outer side thereof is formed to be inclined downward.

On the other hand, most of the foreign matter or dust that has not passed through the first cyclone 110 falls down and is collected in the first storage section (D1), but according to circumstances, foreign matter or dust may be caught or accumulated and fixed on the mesh filter 112 do. It may reduce an area of the mesh filter 112 for allowing air to pass therethrough, thereby increasing a load on the fan unit that provides suction power as well as visually giving a non-clean impression to the user.

In order to solve this problem, a method of disassembling and cleaning the dust collector may be taken into consideration, but it may cause usage inconveniences to the user, and also there is a problem that cleaning is not easy, in fact, due to a structure in which a portion where the first cyclone is disposed is partitioned from the first storage section (for example, partitioned by the vane 182 of the guide unit 180 or a skirt which will be described later).

Hereinafter, a structure capable of continuously removing foreign matter and dust from being caught or accumulated on the mesh filter 112 during the operation of the vacuum cleaner 1 will be described.

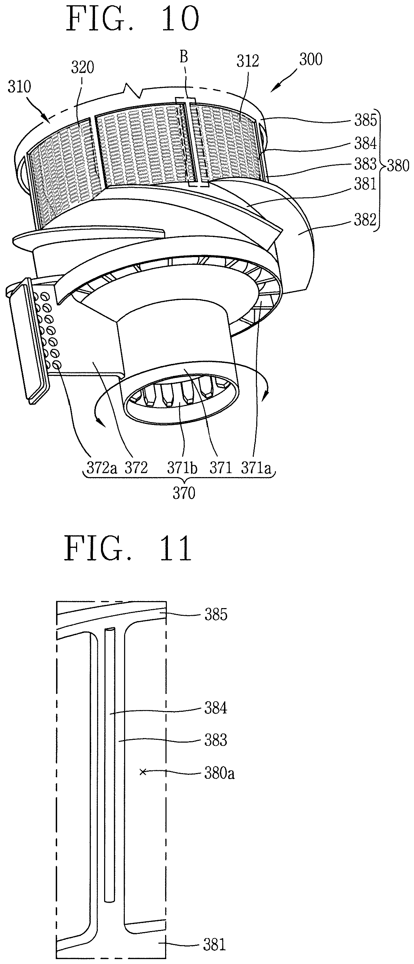

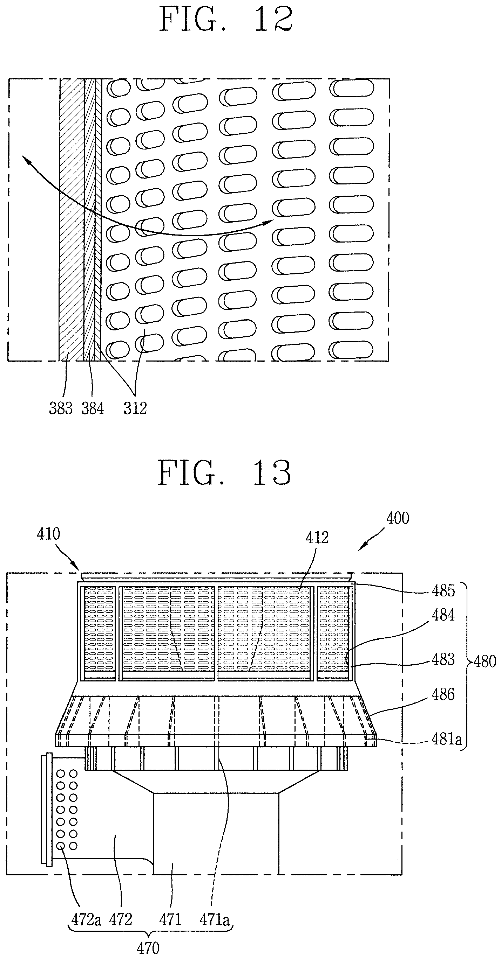

FIG. 10 is a perspective view illustrating another example of the dust collector 300 illustrated in FIG. 1, and FIG. 11 is an enlarged view illustrating an inner side of portion "B" illustrated in FIG. 10, and FIG. 12 is a cross-sectional view illustrating portion "B" illustrated in FIG. 10.

Referring to FIGS. 10 through 12, a rotating unit 380 is coupled to the pressurizing unit a70 to rotate along with the pressurizing unit 370. As illustrated in the drawing, the rotating unit 380 is formed to surround at least part of the first cyclone 310, and configured to be relatively rotatable with respect to the first cyclone 310 in at least one direction.

The rotating unit 380 is configured to scratch or sweep off foreign matter and dust caught or accumulated on the mesh filter 312 of the first cyclone 310 during rotation. In order to implement this, the rotating unit 380 includes a lower frame 381, an upper frame 385 and a pillar 383.

The lower frame 381 is coupled to the rotating portion 371 of the pressurizing unit 370, and formed in a cylindrical shape at a lower portion or lower side of the first cyclone 310. For example, a lower frame 381 may be formed to surround a lower end of the first cyclone 310.

In the present disclosure, the lower frame 381 may be understood as a configuration similar to the base 181 of the guide unit 180 described above. The lower frame 381 may be formed in parallel to an axial direction of the outer case 301.

The vane 382 may protrude from the lower frame 381 toward the inner circumferential surface of the outer case 301. The vane 382 is spirally extended from the upper side toward the lower side. The vane 382 may be introduced into the dust collector 300 and extended in spiral shape along a flow direction of air circulating along an inner circumference of the outer case 301.

The upper frame 385 is spaced upward from the lower frame 381 by a predetermined distance and formed to surround an upper end of the first cyclone 310.

The pillar 383 is disposed to cover the mesh filter 312 and extended along a vertical direction of the mesh filter 312 and connected to the lower frame 381 and the upper frame 385, respectively. In other words, the lower frame 381 is connected to a lower end of the pillar 383, and the upper frame 385 is connected to an upper end of the pillar 383 so as to surround part of the first cyclone 310 as a whole.

A plurality of pillars 383 may be provided therein, and disposed at preset intervals along an outer circumference of the first cyclone 310. As a result, an opening is formed between adjacent two pillars 383, and the mesh filter 312 is exposed through the opening. Accordingly, air spirally flowing through an annular space between the outer case 301 and the first cyclone 310 passes through the mesh filter 312 exposed through the opening and flows into the first cyclone 310 do.

When the pressurizing unit 370 receives a driving force of the drive unit 50 from the driving force transmitting unit 363 to rotate, the rotating unit 380 connected to the pressurizing unit 370 is rotated along with the pillar 383, and at this time, the pillar 383 moves along an outer circumference of the mesh filter 312.

A scraper 384 is provided on an inner surface of the pillar 383 facing an outer surface of the mesh filter 312. The scraper 384 has a shape extended along a length direction of the pillar 383, and is disposed to cross the mesh filter 312 in a vertical direction on the mesh filter 312.

The scraper 384 is configured to scrape off or sweep up foreign matter and dust accumulated on the mesh filter 312 during the rotation of the rotating unit 380. To this end, the scrapers 384 may be configured to be in contact with the mesh filter 312.

The scraper 384 may be configured with a brush, formed of an elastic material, or formed of a synthetic resin material similar to the pillar 383.

When the scraper 384 is configured with a brush, it has an advantage that the brush is inserted into a gap of the mesh filter 312 to effectively remove foreign matter or dust accumulated on the gap. When the scraper 384 is configured with a brush, the scraper 384 may be inserted into a slot formed along an extension direction of the pillar 383 and fixed to the pillar 383.

The scraper 384 may be formed of an elastic material (e.g., rubber, silicone, etc.), and integrally coupled to the pillar 383 by double injection molding. When the scraper 384 is formed of an elastic material, it has an advantage that the scraper 384 is brought into close contact with the mesh filter 312 to effectively sweep off foreign matter accumulated on the mesh filter 312.

The scraper 384 may be formed of the same synthetic resin material as the pillar 383 and integrally formed with the pillar 383 by injection molding. The scraper 384 may be protruded along an extension direction of the pillar 383. In this case, it has an advantage that the unit rotating unit 380 having a single material provided with the scraper 384 may be manufactured through one injection molding.

On the other hand, though not shown in the drawing, the backflow limiting rib 101a described in conjunction with the embodiment of FIGS. 2 through 7 and the modified example of FIG. 8 may be combined with the vane 382 of the present embodiment.

Describing it in brief, the backflow limiting rib 101a inclined in a direction intersecting the vane 382 may be protruded on an inner circumferential surface of the outer case 301 facing the vane 382. A plurality of backflow limiting ribs 101a may be disposed to be spaced apart at preset intervals along an inner circumferential surface of the outer case 301.

Due to the formation of the backflow limiting rib 101a, foreign matter flowing backward from the first storage section (D1) into the vane 182 may be caught by the backflow limiting rib even if the foreign matter is moved upward by the rotation of the vane 182. Accordingly, foreign matter may not completely flow backward to an upper side of the guide unit 180, and be collected again into the first storage section (D1).

Hereinafter, a modified example of the rotating unit 480 will be described with reference to FIGS. 13 through 16.

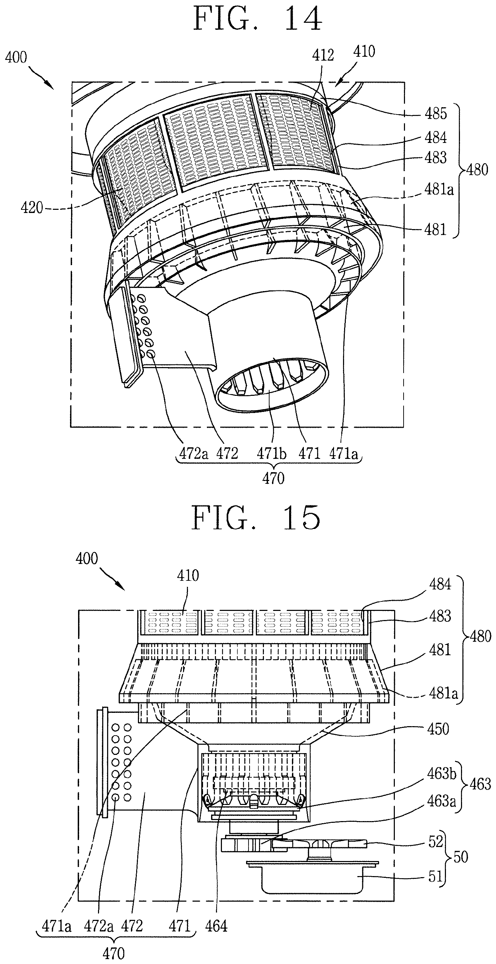

FIG. 13 is a conceptual view illustrating a modified example of the rotating unit 480 illustrated in FIG. 10, and FIG. 14 is a view in which the dust collector 400 illustrated in FIG. 13 is seen from a lower side, and FIG. 15 is a conceptual view for explaining a structure in which a driving force of the drive unit 50 is transmitted to the rotating unit 480 by a driving force transmission unit 463, and FIG. 16 is a cross-sectional view of the dust collector 400 illustrated in FIG. 15.

Referring to FIGS. 13 through 16, the rotating unit 480 includes a lower frame 481, an upper frame 485, a pillar 483, a scraper 484, and a skirt 486. The modified example has the same structure as the rotating unit 480 described in the previous embodiment excluding the skirt 486 and the roller portion 481a. As a result, the redundant description thereof will be omitted.

The skirt 486 extended outward in an inclined downward direction is protruded on the lower frame 481. Accordingly, a gap between the skirt 486 and the lower frame 481 gradually increases as it goes from the upper portion to the lower portion.

As the skirt 486 is formed, foreign matter and dust falling without passing through a mesh filter 412 of the first cyclone 410 are guided by the skirt 486 and introduced into the first storage section (D1), but the foreign matter and dust collected in the first storage section (D1) are restricted from flowing upward by the skirt 486. In other words, a backflow of foreign matter and dust collected in the first storage section (D1) is restricted by the skirt 486.

However, since the gap between the outer case 401 and the skirt 486 decreases toward the lower side, it may cause a problem in which foreign matter may be caught in the gap when a size of the foreign matter is large. It prevents other foreign matter and dust from flowing into the first storage section (D1) through the gap.

However, in the present modified example, the rotating unit 480 is coupled with the pressurizing unit 470, and configured to be rotatable along with the pressurizing unit 470, and thus even if foreign matter is caught in a gap between the skirt 486 and the outer case 401, the foreign matter may be released by the rotation of the rotating unit 480. The foreign matter released from the gap may be introduced into the first storage section (D1) by rotational flow due to the driving of the vacuum cleaner 1.

On the other hand, roller portions 481a, 471a configured with a plurality of ribs extended in a radial direction at preset intervals may be provided on at least one of the rotating unit 480 and the pressurizing unit 470. On the present drawing, it is shown that a first roller portion 481a and a second roller portion 471a are provided in the rotating unit 480 and the pressurizing unit 470, respectively.

Describing the first roller portion 481a first, a plurality of ribs forming the first roller portion 481a may be formed in a gap between the lower frame 481 and the skirt 486 in a radial direction. The plurality of ribs are disposed to face a lower cover thereof (not shown).

A plurality of ribs constituting the second roller portion 471a may be extended in a radial direction at preset intervals on the rotating portion 471 facing the lower cover.

As the rotating unit 480 is configured to surround at least part of the pressurizing unit 470, the first roller portion 481a may be formed to surround the second roller portion 471a.

According to the above configuration, an upper portion of foreign matter and dust collected in the first storage section (D1) during the rotation of the pressurizing unit 470 and the rotating unit 480 coupled thereto collides repeatedly with the plurality of ribs constituting the first and second roller portions 481a, 471a. As a result, the foreign matter and dust are rotated, and finally the collected foreign matter and dust are rolled in a state of being agglomerated in a substantially spherical shape.

The first and second roller portions 481a, 471a may have different heights with respect to the lower cover 460. In the present embodiment, it is shown that the first roller portion 481a is located above the second roller portion 471a. According to the above structure, the first or second rolls 481a, 471a corresponding to an accumulation height of foreign object and dust may be suitably used to agglomerate the foreign matter and dust in a spherical shape. In other words, the first roller portion 481a may be used to agglomerate foreign matter and dust having a relatively larger volume than the second roller portion 471a into a spherical shape.

However, the present disclosure is not limited thereto. The first and second roller portions 481a, 471a may have the same height with respect to the lower cover 460. In this case, a plurality of ribs constituting the first roller portion 481a and a plurality of ribs constituting the second roller portion 471a may be provided to cross each other along a rotational direction.

As illustrated above in FIG. 1, the vacuum cleaner 1 of the present disclosure is configured in such a manner that air including foreign matter, dust, fine dust, and ultrafine dust, which are sucked through the suction unit 20, is directly introduced into the dust collector 100 without passing through the cleaner body 10. To this end, an upper cover 140 of the dust collector 100 is provided with an inlet and an outlet for introducing and discharging air, respectively, and the inlet is directly connected to the connection unit 30 connected to the suction unit 20.

Hereinafter, the upper cover 140 having both an inlet and an outlet will be described in more detail.

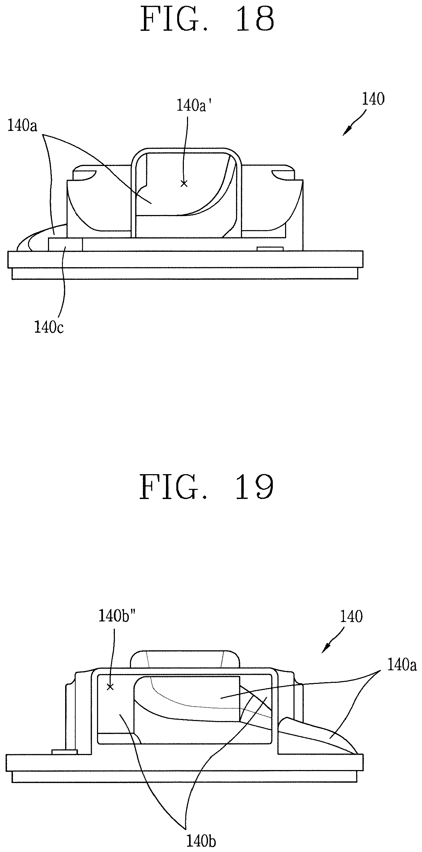

FIG. 17 is a view illustrating that the upper cover 140 is separated from the dust collector 100 illustrated in FIG. 2, and FIG. 18 is a view in which an inlet side of the upper cover 140 illustrated in FIG. 17 is seen, and FIG. 19 is a view in which an outlet side of the upper cover 140 illustrated in FIG. 17 is seen, and FIG. 20 is a view in which a bottom side of the upper cover 140 illustrated in FIG. 17 is seen, and FIG. 21 is a conceptual view illustrating a flow current in the upper cover 140 illustrated in FIG. 17.

Referring to FIGS. 17 through 21 along with FIGS. 1 through 3 in the above, the upper cover 140 is mounted on an upper side of the outer case 101 to cover the cover member 130. Accordingly, the upper cover 140 is disposed to cover both the first and second cyclones 110, 120. The upper cover 140 may form an upper appearance of the dust collector 100.

The upper cover 140 is provided with an intake guide 140a and an exhaust guide 140b which form passages separated from each other. The intake guide 140a forms a passage for introducing air into the outer case 101, and the exhaust guide 140b forms a passage for discharging air from which foreign matter, dust and fine dust have been separated while passing through the first and second cyclones 110, 120.

The intake guide 140a and the exhaust guide 140b have an inlet 140a', 140b' and an outlet 140a", 140b", respectively. According to the present drawing, it is shown that the inlet 140a' of the intake guide 140a is open in a direction opposite to the outlet 140b" of the exhaust guide 140b.

The connection unit 30 connected to the suction unit 20 for sucking air containing foreign matter, dust and fine dust is directly connected to the inlet of the intake guide 140a. The outlet of the intake guide 140a is formed on a bottom surface of the upper cover 140 to communicate with an annular space between the outer case 101 and the first cyclone 110.

At least part of the intake guide 140a is bent and extended toward an inner circumference of the outer case 101 in such a manner that air introduced through the inlet 140a' performs a swirling movement in a spiral shape when flowing into the annular space.

In the present embodiment, it is shown that the intake guide 140a is formed as a single passage. In other words, the intake guide 140a is provided with one inlet 140a' and one outlet 140a". As a result, when compared with a modified example which will be described later, a cross-sectional area of the intake guide 140a may be increased to further reduce a phenomenon in which a large foreign matter is caught thereinside, and solve a problem of interference between structures and electronic components adjacent to the upper cover 140 at a predetermined level due to the simplification of the structure of the intake guide 140a.

The inlet of the exhaust guide 140b is formed on a bottom surface of the upper cover 140 to communicate with an inner space of the vortex finder 122 located in the second cyclone 120. Referring to FIGS. 2 and 3, the cover member 130 is formed with a communication hole 130a corresponding to the vortex finder 122, and thus the inlet of the exhaust guide 140b is configured to communicate with the communication hole 130a.

The inlet 140b' of the exhaust guide 140b may be formed on both sides of the intake guide 140a forming a single passage. The outlet 140b" of the exhaust guide 140b is configured to communicate with the inlet 140b' of the exhaust guide 140b formed on both sides of the intake guide 140a.

Air discharged through the outlet 140b" of the exhaust guide 140b may be discharged directly to the outside or discharged to the outside through the exhaust port of the cleaner body 10 as illustrated in FIG. 1. In the latter case, a porous prefilter (not shown) configured to filter ultrafine dust from the air may be installed on a passage extended from the outlet 140b" of the dust collector 100 to the exhaust port of the cleaner body 10.

As described above, when the intake guide 140a is formed with a single flow path, and the exhaust guide 140b is formed using a vacant space of the intake guide 140a, it may be possible to provide the upper cover 140 having a secure suction efficiency.

The upper cover 140 having the foregoing structure may be integrally formed by injection molding. As illustrated in FIG. 17, the upper cover 140 may be injection molded by three molds, which are assembled and separated in three directions, such as an inlet side (M1) of the intake guide 140a, an outlet side (M2) of the exhaust guide 140b, and a bottom side (M3) of the upper cover 140.

Parting lines due to injection molding in the three directions may be respectively formed on the upper cover 140. Accordingly, it may be possible to check how the upper cover 140 is manufactured (i.e., whether or not the upper cover 140 is manufactured by injection molding in the same manner as that of the present embodiment) based on the parting line.

A problem in injection molding of the upper cover 140 depends on how to form the intake guide 140a and the exhaust guide 140b. In particular, when each of the intake guide 140a and the exhaust guide 140b is formed in three dimensions, a passage is formed by at least two molds, and the two molds must be able to meet with each other.

Referring to FIG. 20, the intake guide 140a may be formed by two molds assembled in two directions, such as the inlet side (M1) of the intake guide 140a and the bottom side (M3) of the upper cover 140. A region in which the two molds meet with each other is M13, and a parting line may be formed in the region.

Moreover, the exhaust guide 140b may be formed by two molds assembled in two directions, such as the outlet side (M2) of the exhaust guide 140b and the bottom side (M3) of the upper cover 140. A region in which the two molds meet with each other is M23 provided on both sides of the intake guide 140a, and a parting line may be formed in the region.

In this manner, the upper cover 140 formed with the intake guide 140a and the exhaust guide 140b may be injection molded at one time using three molds. Accordingly, it may be possible to increase the mass productivity of the upper cover 140.

Hereinafter, a modified example of an upper cover 540 in which an intake guide 540a is configured with one inlet 540a' and two outlets 540a1", 540a2" will be described.

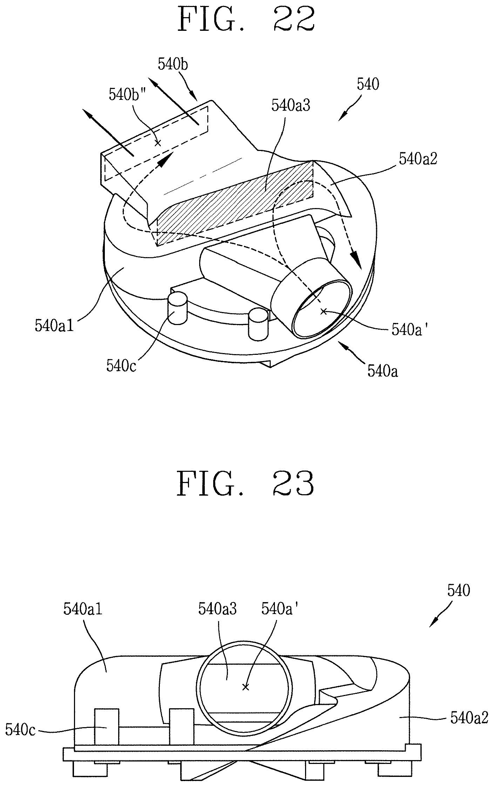

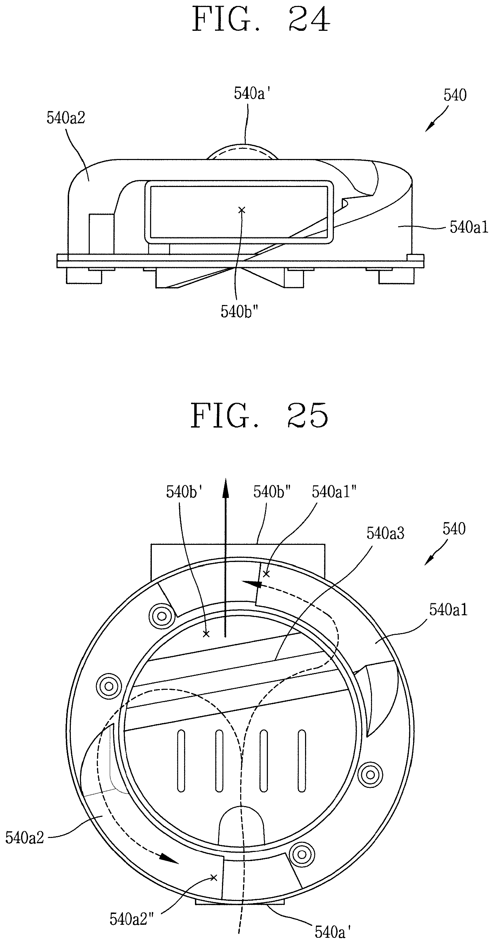

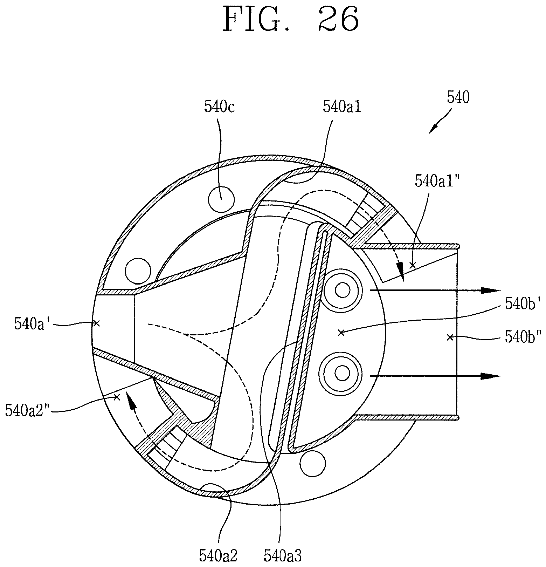

FIG. 22 is a conceptual view illustrating a modified example of the upper cover 140 illustrated in FIG. 17, and FIG. 23 is a view in which an inlet side of the upper cover 540 illustrated in FIG. 22 is seen, and FIG. 24 is a view in which an outlet side of the upper cover 540 illustrated in FIG. 22 is seen, and FIG. 25 is a view in which a bottom side of the upper cover 540 illustrated in FIG. 22 is seen, and FIG. 26 is a conceptual view illustrating a flow current in the upper cover 540 illustrated in FIG. 22.

Similarly to the foregoing embodiment, the upper cover 540 of the present modified example is mounted to cover the cover member 130 at an upper side of the outer case 101. Accordingly, the upper cover 540 is disposed to cover both the first and second cyclones 110, 120. The upper cover 540 may form an upper appearance of the dust collector 100.

Referring to FIGS. 22 to 26, the upper cover 540 is provided with an intake guide 540a and an exhaust guide 540b forming passages separated from each other. The intake guide 540a forms a passage for introducing air into the outer case 101, and the exhaust guide 540b forms a passage for discharging air from which foreign matter, dust and fine dust have been separated while passing through the first and second cyclones 110, 120.

The intake guide 540a and the exhaust guide 540b are provided with an inlet 540a', 540b' and an outlet 540a1', 540a2"/540b", respectively. According to the present drawing, it is shown that the inlet 540a' of the intake guide 540a has a shape that is open in a direction opposite to the outlet 540b" of the exhaust guide 540b.

The present modified example is different from the foregoing embodiment in that the intake guide 540a has one inlet 540a' and two outlets 540a1", 540a2". The inlet 540a' of the intake guide 540a is directly connected to the connection unit 30 connected to the suction unit 20 for sucking air containing foreign matter, dust and fine dust. The two outlets 540a1", 540a2" of the intake guide 540a are formed on a bottom surface of the upper cover 540 to communicate with an annular space between the outer case 101 and the first cyclone 110.

The intake guide 540a includes a branch wall 540a3, and a first and a second branch passages 540a1, 540a2.

The branch wall 540a3 is formed at a position facing the inlet of the intake guide 540a. Accordingly, air introduced through the inlet of the intake guide 540a may collides with the branch wall 540a3 to be scattered to both sides of the branch wall 540a3.

The branch wall 540a3 may be formed perpendicular to the inlet 540a' of the intake guide 540a. In this case, the air that has collided with the branch wall 540a3 may be evenly distributed to the left and right sides of the branch wall 540a3. However, in this case, due to a flow of air into the inlet 540a 'of the intake guide 540a, there may occur a phenomenon that foreign matter is attached to the branch wall 540a3 facing the inlet 540a' to be stagnant.

In order to prevent this, as illustrated in the drawing, the branch wall 540a3 may be formed to be inclined with respect to the inlet 540a' of the intake guide 540a. In other words, the branch wall 540a3 may be formed in a shape such that the left or right side thereof is inclined closer to the inlet. According to the above structure, it may be configured such that foreign matter is movable along the inclined branch wall 540a3, thereby solving a foreign matter stagnation phenomenon in a structure in which the branch wall 540a3 is formed perpendicular to the inlet 540a' of the intake guide 540a.

The first and second branch passages 540a1, 540a2 are provided at both sides of the branch wall 540a3, and bent on at least part thereof and extended toward an inner circumference of the outer case 101 to perform a swirling movement in a spiral shape when air is introduced into an annular space between the outer case 101 and the first cyclone 110.

The first and second branch passages 540a1, 540a2 may be extended in mutually the same rotational direction. In order to implement this, either one of the first and second branch passages 540a1, 540a2 forms a passage toward a rear side of the branch wall 540a3 and the other one forms a passage toward a front side of the branch wall 540a3.

The inlet 540b' of the exhaust guide 540b is formed on a bottom surface of the upper cover 540 to communicate with an inner space of the vortex finder 122 located in the second cyclone 120. As described above, when the communication hole 130a corresponding to the vortex finder 122 is formed on the cover member 130, the inlet 140b' of the exhaust guide 540b is configured to communicate with the communication hole 130a.

The outlet 540b" of the exhaust guide 540b is configured to communicate with the inlet 540b' of the exhaust guide 540b. Air discharged through the outlet 540b" of the exhaust guide 540b is directly discharged to the outside, and discharged to the outside through an exhaust port of the cleaner body 10 as illustrated in FIG. 1. In the latter case, a porous prefilter (not shown) configured to filter ultrafine dust from the air may be installed on a passage extended from the outlet of the dust collector 100 to the exhaust port of the cleaner body 10.

## Claims

1. A vacuum cleaner, comprising:
a cleaner body (10); and
a dust collector (100) disposed in the cleaner body (10),
wherein the dust collector (100) comprises:
an outer case (101);
a first cyclone (110) provided within the outer case (101), and
a second cyclone (120);
**characterized by**
the first cyclone (110) being provided with a housing (111) on which a plurality of openings are formed along an outer circumference thereof and a mesh filter (112) mounted on the housing (111) to cover the openings;
the second cyclone (120) being configured to separate fine dust from air from which dust and foreign matter introduced into the first cyclone through the mesh filter (112) are separated; and
a rotating unit (380, 480) configured to be rotatable in at least one direction with respect to the first cyclone (110), and provided with a scraper (384, 484) moved along an outer circumference of the first cyclone (110) while being in contact with the mesh filter (112) during the rotation.

2. The vacuum cleaner of claim 1, wherein the dust collector (100) further comprises a pressurizing unit (370, 470) configured to be rotatable in both directions in a dust storage section (D1) to pressurize dust and foreign matter collected into the dust storage section (D1) formed below the rotating unit (380, 480) so as to reduce a volume thereof, and
the rotating unit (380, 480) is coupled to the pressurizing unit (370, 470) to rotate along with the pressurizing unit.

3. The vacuum cleaner of claim 1, comprising:
wherein the second cyclone (120) is accommodated within the first cyclone (110); and
wherein the rotating unit (380, 480) is formed to surround part of the first cyclone (110),, and
wherein the rotating unit (380, 480) further comprises:
a pillar (383, 483) disposed to cover the mesh filter (112), and formed to extend along a vertical direction of the mesh filter (112); and
wherein the scraper (384, 484) is provided on an inner surface of the pillar (383, 483) facing an outer surface of the mesh filter (112), and is configured to sweep off dust and foreign matter accumulated on the mesh filter (112) during the rotation of the rotating unit (380, 480).

4. The vacuum cleaner of claim 2, wherein the scraper (384, 484) is a brush.

5. The vacuum cleaner of claim 2, wherein the scraper (384, 484) is formed of an elastic material, and integrally coupled to the pillar (383, 483) formed of a synthetic resin material by double injection molding, or wherein the scraper (384, 484) is formed of the same synthetic resin material as that of the pillar (383, 483) and integrally formed with the pillar by injection molding.

6. The vacuum cleaner of claim 2, wherein a plurality of pillars (383, 483) are disposed to be spaced apart at preset intervals along an outer circumference of the first cyclone (110).

7. The vacuum cleaner of claim 2, wherein the rotating unit (380, 480) further comprises:
a lower frame (381, 481) connected to a lower end of the pillar (383, 483) and formed to surround a lower end of the first cyclone (110); and
an upper frame (385, 485) connected to an upper end of the pillar (383, 483) and formed to surround an upper end of the first cyclone (110).

8. The vacuum cleaner of claim 7, wherein a skirt (486) extended downward in an outwardly inclined manner is protruded from the lower frame (481) to prevent the scattering of dust collected in a dust storage section at a lower portion of the rotating unit (480).

9. The vacuum cleaner of claim 7, wherein the lower frame (181, 381) is provided with a vane (182, 382) extended in a spiral shape along a flow direction of air introduced into the outer case (101) to induce an inflow of dust and foreign matter filtered by the first cyclone (110).

10. The vacuum cleaner of claim 9, wherein a backflow limiting rib (101a) inclined in a direction intersecting the vane (182) is protruded from an inner circumferential surface of the outer case (101) facing the vane (182) such that foreign matter introduced into the vane (182) is caught while flowing backward in an upward direction by the rotation of the rotating unit (180).

11. The vacuum cleaner of claim 2, wherein the dust collector further comprises a pressurizing unit (370, 470) configured to be rotatable in both directions in a dust storage section (D1) to pressurize dust and foreign matter collected into the dust storage section (D1) formed below the rotating unit (370, 470) so as to reduce a volume thereof, and
the rotating unit (380, 480) is coupled to the pressurizing unit (370, 470) to rotate along with the pressurizing unit (370, 470).

12. The vacuum cleaner of claim 11, wherein the rotating unit (480) and the pressurizing unit (470) are respectively provided with a first foreign matter roller portion (481a) and a second foreign matter roller portion (471a) configured with a plurality of ribs extended in respective radial directions at preset intervals.

13. The vacuum cleaner of claim 2, wherein a discharge port (120b) of the second cyclone (120) is provided to pass through a bottom surface of the first cyclone (110), and
an inner case (150) for accommodating the discharge port (120b) is provided at a lower portion of the first cyclone (110) to form a fine dust storage section for collecting fine dust discharged through the discharge port (120b).

14. The vacuum cleaner of claim 13, wherein the dust collector (100) further comprises:
a lower cover (160) hinge-coupled to the outer case (101) to form a bottom surface of a dust storage section (D1) and a fine dust storage section (D2) provided at an outside and an inside of the inner case (150), respectively, and configured to open the dust storage section (D1) and the fine dust storage section (D2) at the same time when relatively rotating with respect to the outer case (101) by a hinge.

## Patentansprüche

1. Staubsauger, der aufweist:
einen Reinigerkörper (10); und
einen Staubsammler (100), der in dem Reinigerkörper (10) angeordnet ist,
wobei der Staubsammler (100) aufweist:
ein Außengehäuse (101);
einen ersten Zyklon (110), der innerhalb des Außengehäuses (101) bereitgestellt ist, und
einen zweiten Zyklon (120);
**dadurch gekennzeichnet, dass**
der erste Zyklon (110) mit einem Gehäuse (111), auf dem entlang seines Außenumfangs mehrere Öffnungen ausgebildet sind, und einem Filtersieb (112) versehen ist, das auf dem Gehäuse (111) montiert ist, um die Öffnungen zu bedecken;
der zweite Zyklon (120) konfiguriert ist, um Feinstaub von Luft zu trennen, von welcher Staub und Fremdstoffe, die in den ersten Zyklon eingeleitet werden, durch das Filtersieb (112) getrennt werden; und
eine Rotationseinheit (380, 480), die derart konfiguriert ist, dass sie in wenigstens eine Richtung in Bezug auf den ersten Zyklon (110) drehbar ist, und die mit einem Schaber (384, 484) versehen ist, der entlang eines Außenumfangs des ersten Zyklons (110) bewegt wird, während er während der Drehung in Kontakt mit dem Filtersieb (112) ist.

2. Staubsauger nach Anspruch 1, wobei der Staubsammler (100) ferner eine Unter-Druck-Setzungseinheit (370, 470) hat, die derart konfiguriert ist, dass sie in einem Staublagerabschnitt (D1) in beide Richtungen drehbar ist, um Staub und Fremdstoffe, die in dem Staubsammelabschnitt (D1) gesammelt werden, der unterhalb der Rotationseinheit (380, 480) ausgebildet ist, unter Druck zu setzen, um deren Volumen zu verringern, und
wobei die Rotationseinheit (380, 480) mit der Unter-Druck-Setzungseinheit (370, 470) gekoppelt ist, um sich zusammen mit der Unter-Druck-Setzungseinheit zu drehen.

3. Staubsauger nach Anspruch 1, der aufweist:
wobei der zweite Zyklon (120) innerhalb des ersten Zyklons (110) aufgenommen ist; und
wobei die Rotationseinheit (380, 480) derart ausgebildet ist, dass sie einen Teil des ersten Zyklons (110) umgibt, und
wobei die Rotationseinheit (380, 480) ferner aufweist:
eine Stütze (383, 483), die derart angeordnet ist, dass sie das Filtersieb (112) bedeckt, und derart ausgebildet ist, dass sie sich entlang einer Vertikalrichtung des Filtersiebs (112) erstreckt; und
wobei der Schaber (384, 484) auf einer Innenoberfläche der Stütze (383, 483), die der Außenoberfläche des Filtersiebs (112) zugewandt ist, bereitgestellt ist und konfiguriert ist, um Staub und Fremdstoffe, die sich während der Drehung der Rotationseinheit (380, 480) auf dem Filtersieb (112) angesammelt haben, wegzufegen.

4. Staubsauger nach Anspruch 2, wobei der Schaber (384, 484) eine Bürste ist.

5. Staubsauger nach Anspruch 2, wobei der Schaber (384, 484) aus einem elastischen Material ausgebildet ist und mit der Stütze (383, 483), die durch doppeltes Spritzgießen aus Kunstharzmaterial ausgebildet ist, integral gekoppelt ist, oder wobei der Schaber (384, 484) aus dem gleichen Kunstharzmaterial wie dem der Stütze (383, 483) ausgebildet ist und durch Spritzgießen integral mit der Stütze ausgebildet ist.

6. Staubsauger nach Anspruch 2, wobei mehrere Stützen (383, 483) derart angeordnet sind, dass sie in vorgegebenen Abständen entlang eines Außenumfangs des ersten Zyklons (110) beabstandet sind.

7. Staubsauger nach Anspruch 2, wobei die Rotationseinheit (380, 480) ferner aufweist:
einen unteren Rahmen (381, 481), der mit einem unteren Ende der Stütze (383, 483) verbunden und derart ausgebildet ist, dass er ein unteres Ende des ersten Zyklons (110) umgibt; und
einen oberen Rahmen (385, 485), der mit einem oberen Ende der Stütze (383, 483) verbunden ist und derart ausgebildet ist, dass er ein oberes Ende des ersten Zyklons (110) umgibt.

8. Staubsauger nach Anspruch 7, wobei eine Schürze (486), die sich in einer nach außen geneigten Weise abwärts erstreckt, von dem unteren Rahmen (481) vorsteht, um die Streuung von Staub, der in einem Staublagerabschnitt gesammelt wird, an einem unteren Abschnitt der Rotationseinheit (480) zu verhindern.

9. Staubsauber nach Anspruch 7, wobei der untere Rahmen (181, 381) mit einem Leitflügel (182, 382) versehen ist, der sich in einer Spiralform entlang einer Strömungsrichtung von Luft, die in das Außengehäuse (101) eingeleitet wird, erstreckt, um einen Zustrom von Staub und Fremdstoffen, die von dem ersten Zyklon (110) gefiltert werden, zu induzieren.

10. Staubsauger nach Anspruch 9, wobei eine Rückströmungsbegrenzungsrippe (101a), die in einer Richtung, welche den Leitflügel (182) schneidet, von einer Innenumfangsoberfläche des Außengehäuses (101), die dem Leitflügel (182) zugewandt ist, gezeigt ist, derart vorsteht, dass Fremdstoffe, die in den Leitflügel (182) eingeleitet werden, eingefangen werden, während sie durch die Drehung der Rotationseinheit (180) in einer Aufwärtsrichtung rückwärts strömen.

11. Staubsauger nach Anspruch 2, wobei der Staubsammler ferner eine Unter-Druck-Setzungseinheit (370, 470) aufweist, die derart konfiguriert ist, dass sie in einem Staublagerabschnitt (D1) in beide Richtungen drehbar ist, um Staub und Fremdstoffe, die in dem Staubsammelabschnitt (D1), der unterhalb der Rotationseinheit (370, 470) ausgebildet ist, gesammelt werden, unter Druck zu setzen, um deren Volumen zu verringern, und
wobei die Rotationseinheit (380, 480) derart mit der Unter-Druck-Setzungseinheit (370, 470) gekoppelt ist, dass sie sich zusammen mit der Unter-Druck-Setzungseinheit (370, 470) dreht.

12. Staubsauger nach Anspruch 11, wobei die Rotationseinheit (480) und die Unter-Druck-Setzungseinheit (470) jeweils mit einem ersten Fremdstoffwalzenabschnitt (481a) und einem zweiten Fremdstoffwalzenabschnitt (471a) versehen sind, der mit mehreren Rippen konfiguriert ist, die sich in vorgegebenen Abständen in jeweilige Radialrichtungen erstrecken.

13. Staubsauger nach Anspruch 2, wobei eine Abgabeöffnung (120b) des zweiten Zyklons (120) derart bereitgestellt ist, dass sie durch eine untere Oberfläche des ersten Zyklons (110) geht, und
wobei ein Innengehäuse (150) zum Aufnehmen der Abgabeöffnung (120b) an einem unteren Abschnitt des ersten Zyklons (110) bereitgestellt ist, um einen Feinstaublagerabschnitt zum Sammeln von durch die Abgabeöffnung (120b) abgegebenem Feinstaub zu bilden.

14. Staubsauger nach Anspruch 13, wobei der Staubsammler (100) ferner aufweist:
eine untere Abdeckung (160), die gelenkig mit dem Außengehäuse (101) gekoppelt ist, um eine untere Oberfläche eines Staubsammelabschnitts (D1) und eines Feinstaubsammelabschnitts (D2) zu bilden, die jeweils an einem Äußeren und einem Inneren des Innengehäuses (150) bereitgestellt ist und konfiguriert ist, um den Staublagerabschnitt (D1) und den Feinstaublagerabschnitt (D2) gleichzeitig zu öffnen, wenn sie sich durch ein Gelenk relativ zu dem Außengehäuse (101) dreht.

## Revendications

1. Aspirateur, comprenant :
un corps d'aspirateur (10) ; et
un collecteur de poussière (100) disposé dans le corps d'aspirateur (10),
dans lequel le collecteur de poussière (100) comprend :
un carter extérieur (101) ;
un premier cyclone (110) prévu à l'intérieur du carter extérieur (101), et
un second cyclone (120) ;
**caractérisé en ce que**
le premier cyclone (110) est pourvu d'un boîtier (111) sur lequel une pluralité d'ouvertures sont formées le long d'une circonférence extérieure de celui-ci et d'un filtre à tamis (112) monté sur le boîtier (111) pour recouvrir les ouvertures ;
le second cyclone (120) est configuré pour séparer une poussière fine d'un air duquel une poussière et des corps étrangers introduits dans le premier cyclone à travers le filtre à tamis (112) sont séparés ; et
une unité rotative (380, 480) configurée pour être rotative dans au moins une direction par rapport au premier cyclone (110), et pourvue d'un racleur (384, 484) déplacé le long d'une circonférence extérieure du premier cyclone (110) tout en étant en contact avec le filtre à tamis (112) pendant la rotation.

2. Aspirateur selon la revendication 1, dans lequel le collecteur de poussière (100) comprend en outre une unité de pressurisation (370, 470) configurée pour être rotative dans les deux directions dans une section de stockage de poussière (D1) pour pressuriser de la poussière et des corps étrangers collectés dans la section de stockage de poussière (D1) formée au-dessous de l'unité rotative (380, 480) afin de réduire un volume de ceux-ci, et
l'unité rotative (380, 480) est couplée à l'unité de pressurisation (370, 470) pour tourner avec l'unité de pressurisation.

3. Aspirateur selon la revendication 1,
dans lequel le second cyclone (120) est logé à l'intérieur du premier cyclone (110) ; et
dans lequel l'unité rotative (380, 480) est formée pour entourer une partie du premier cyclone (110), et
dans lequel l'unité rotative (380, 480) comprend en outre :
un pilier (383, 483) disposé pour recouvrir le filtre à tamis (112), et formé pour s'étendre le long d'une direction verticale du filtre à tamis (112) ; et
dans lequel le racleur (384, 484) est prévu sur une surface intérieure du pilier (383, 483) faisant face à une surface extérieure du filtre à tamis (112), et est configuré pour balayer de la poussière et des corps étrangers accumulés sur le filtre à tamis (112) au cours de la rotation de l'unité rotative (380, 480).

4. Aspirateur selon la revendication 2, dans lequel le racleur (384, 484) est une brosse.

5. Aspirateur selon la revendication 2, dans lequel le racleur (384, 484) est formé d'un matériau élastique, et couplé d'un seul tenant au pilier (383, 483) formé d'un matériau de résine synthétique par moulage par injection double, ou dans lequel le racleur (384, 484) est formé du même matériau de résine synthétique que celui du pilier (383, 483) et formé d'un seul tenant avec le pilier par moulage par injection.

6. Aspirateur selon la revendication 2, dans lequel une pluralité de piliers (383, 483) sont disposés pour être espacés à des intervalles préréglés le long d'une circonférence extérieure du premier cyclone (110).

7. Aspirateur selon la revendication 2, dans lequel l'unité rotative (380, 480) comprend en outre :
un cadre inférieur (381, 481) relié à une extrémité inférieure du pilier (383, 483) et formé pour entourer une extrémité inférieure du premier cyclone (110) ; et
un cadre supérieur (385, 485) relié à une extrémité supérieure du pilier (383, 483) et formé pour entourer une extrémité supérieure du premier cyclone (110).

8. Aspirateur selon la revendication 7, dans lequel une jupe (486) étendue vers le bas d'une manière inclinée vers l'extérieure est saillante depuis le cadre inférieur (481) pour empêcher la dispersion de poussière collectée dans une section de stockage de poussière à une portion inférieure de l'unité rotative (480).

9. Aspirateur selon la revendication 7, dans lequel le cadre inférieur (181, 381) est pourvu d'une ailette (182, 382) étendue dans une forme en spirale le long d'une direction d'écoulement d'air introduit dans le carter extérieur (101) pour induire un écoulement entrant de poussière et de corps étrangers filtrés par le premier cyclone (110).

10. Aspirateur selon la revendication 9, dans lequel une nervure de limitation de reflux (101a) inclinée dans une direction en intersection avec l'ailette (182) est saillante depuis une surface circonférentielle intérieure du carter extérieur (101) faisant face à l'ailette (182) de sorte que des corps étrangers introduits dans l'ailette (182) soient attrapés en refluant dans une direction vers le haut par la rotation de l'unité rotative (180).

11. Aspirateur selon la revendication 2, dans lequel le collecteur de poussière comprend en outre une unité de pressurisation (370, 470) configurée pour être rotative dans les deux directions dans une section de stockage de poussière (D1) pour pressuriser de la poussière et des corps étrangers collectés dans la section de stockage de poussière (D1) formée au-dessous de l'unité rotative (370, 470) afin de réduire un volume de ceux-ci, et
l'unité rotative (380, 480) est couplée à l'unité de pressurisation (370, 470) pour tourner avec l'unité de pressurisation (370, 470).

12. Aspirateur selon la revendication 11, dans lequel l'unité rotative (480) et l'unité de pressurisation (470) sont respectivement pourvues d'une première portion de rouleau de corps étrangers (481a) et d'une seconde portion de rouleau de corps étrangers (471a) configurées avec une pluralité de nervures étendues dans des directions radiales respectives à des intervalles préréglés.

13. Aspirateur selon la revendication 2, dans lequel un orifice de décharge (120b) du second cyclone (120) est prévu pour traverser une surface de fond du premier cyclone (110), et
un carter intérieur (150) pour loger l'orifice de décharge (120b) est prévu à une portion inférieure du premier cyclone (110) pour former une section de stockage de poussière fine pour collecter de la poussière fine déchargée à travers l'orifice de décharge (120b).

14. Aspirateur selon la revendication 13, dans lequel le collecteur de poussière (100) comprend en outre :
un couvercle inférieur (160) couplé de manière articulée au carter extérieur (101) pour former une surface de fond d'une section de stockage de poussière (D1) et d'une section de stockage de poussière fine (D2) prévues respectivement à un extérieur et à un intérieur du carter intérieur (150), et configuré pour ouvrir en même temps la section de stockage de poussière (D1) et la section de stockage de poussière fine (D2) lors d'une rotation relative par rapport au carter extérieur (101) par une articulation.
